# EUROPÄISCHE PATENTSCHRIFT

(11) **EP 3 802 273 B1**
(45) Veröffentlichungstag und Bekanntmachung des Hinweises auf die Patenterteilung: **03.05.2023**
(21) Anmeldenummer: 18733510.4
(22) Anmeldetag: 01.06.2018
(51) Int. Cl.: B62B 1/12, B62B 1/14, B62B 1/26, B62B 5/06

(54) **BEFÖRDERUNGSFAHRZEUG UND BEFÖRDERUNGSVORRICHTUNG**
TRANSPORT VEHICLE AND TRANSPORT DEVICE
VÉHICULE DE TRANSPORT ET DISPOSITIF DE TRANSPORT

(43) Veröffentlichungstag der Anmeldung: 14.04.2021
(73) Patentinhaber: TANOS GmbH Verpacken Ordnen Präsentieren, 89257 Illertissen (DE)
(72) Erfinder: WOLLE, Lutz, 89233 Burlafingen (DE); GERBRANDA, Tjeerd Jan Pieter, 89340 Leipheim (DE); HOEKSTRA, Scott, 2563 ZT Den Haag (NL)
(74) Vertreter: Patentanwälte Magenbauer & Kollegen Partnerschaft mbB
(86) Internationale Anmeldenummer: PCT/EP2018/064484
(87) Internationale Veröffentlichungsnummer: WO 2019/228647

(56) Entgegenhaltungen:
- DE-A1- 10 155 588
- DE-A1- 10 307 394
- US-B1- 7 367 571

## Beschreibung

Die Erfindung betrifft ein Beförderungsfahrzeug gemäß dem Oberbegriff von Anspruch 1, umfassend:
- einen Fahrzeugkörper mit einem unteren Abschnitt und einem sich von dem unteren Abschnitt nach oben erstreckenden vertikalen Gestellabschnitt, wobei der untere Abschnitt über eine Stellfläche und über eine Behälter-Befestigungsschnittstelle verfügt, mit der ein kastenförmiger Behälter in einem auf der Stellfläche abgestellten Zustand an dem unteren Abschnitt befestigbar ist,
- einen am Fahrzeugkörper angeordneten Griff, mit dem das Beförderungsfahrzeug in eine Kippstellung versetzbar ist, und
- zwei am unteren Abschnitt angeordnete Räder, mit denen das Beförderungsfahrzeug in der Kippstellung gegenüber einem Boden abgestützt und relativ zum Boden bewegt werden kann.

Ein solches Beförderungsfahrzeug ist aus dem Stand der Technik bekannt. So ist als Beförderungsfahrzeug zur Beförderung von kastenförmigen Behältern beispielsweise das von der Firma TANOS GmbH erhältliche Produkt "Sys-Roll" bekannt.

Das eingangs genannte Beförderungsfahrzeug wird typischerweise dazu eingesetzt, ein oder mehrere kastenförmige Behälter zu einem Einsatzort, beispielsweise einer Baustelle, zu transportieren. In dem kastenförmigen Behälter wird in der Regel Werkzeug, beispielsweise ein Elektrowerkzeug, und/oder Werkzeugzubehör aufbewahrt. Die kastenförmigen Behälter sind insbesondere derart ausgestaltet, dass sie aufeinander gestapelt und vertikal zugfest aneinander gekoppelt werden können, um einen stabilen vertikalen, insbesondere quaderförmigen, Stapel zu bilden. Zu diesem Zweck verfügen die kastenförmigen Behälter jeweils über den gleichen horizontalen Grundriss sowie über Kopplungsmittel, mit denen sie aneinander gekoppelt werden können. Der Stapel kann mit dem untersten kastenförmigen Behälter auf der Stellfläche des Beförderungsfahrzeugs platziert und mittels der Behälter-Befestigungsschnittstelle befestigt werden. Zweckmäßigerweise ist der Stapel nur mit dem untersten kastenförmigen Behälter am Beförderungsfahrzeug befestigt. Der Fahrzeugkörper, insbesondere der vertikale Gestellabschnitt, stellt eine dauerhaft integere Struktur dar; d.h. der Fahrzeugkörper, insbesondere der vertikale Gestellabschnitt, bleibt in seinem Aufbau bei der Anbringung und Abnahme eines kastenförmigen Behälters unverändert. Der kastenförmige Behälter ist zweckmäßigerweise werkzeuglos von dem Beförderungsfahrzeug abnehmbar und/oder an diesem anbringbar.

Das Beförderungsfahrzeug kann manuell in eine Kippstellung versetzt werden, bei der das Beförderungsfahrzeug um eine durch die Räder definierte Kippachse gegenüber dem Boden verkippt ist. In diesem Zustand kann das Beförderungsfahrzeug in der Art einer Sackkarre bewegt, insbesondere geschoben oder gezogen werden. Das Beförderungsfahrzeug kann auch als "sacckarrenartig" bzw. als Sackkarre bezeichnet werden.

Eine Kombination aus dem Beförderungsfahrzeug und dem damit zu befördernden Beförderungsgut, beispielsweise dem genannten kastenförmigen Behälter, soll als die Beförderungsvorrichtung bezeichnet werden.

Die DE 103 07 394 A1 beschreibt ein Transportwagensystem zum manuellen Ein-, Um- und Auslagern, sowie zum Transportieren, mit einem Fahrgestell, das mit einem ein- oder zweisäuligen Ständerrahmen ausgestattet ist. Der Ständerrahmen ist ohne Löcher ausgeführt. Trägerelemente und/oder Funktionselemente können durch Klemmen, Verkeilen, Nutzung von Feststellschrauben oder andere Feststellelemente stufenlose höhenverstellbar befestigt werden.

Die DE 101 55 588 A1 beschreibt einen Handwagen mit Trageeinrichtungen für Behälter.

Eine Aufgabe der Erfindung besteht darin, die Bedienbarkeit der Beförderungsvorrichtung zu verbessern.

Die Aufgabe wird gelöst durch ein Beförderungsfahrzeug gemäß Anspruch 1. Das Beförderungsfahrzeug weist oberhalb der Behälter-Befestigungsschnittstelle eine am vertikalen Gestellabschnitt angeordnete Auszuganordnung mit einem horizontal ausziehbaren Behälter-Aufnahmeelement zur Aufnahme des kastenförmigen Behälters auf, wobei die Auszugsanordnung über einen Befestigungsmechanismus verfügt, mit dem die Auszugsanordnung in einem am vertikalen Gestellabschnitt angebrachten Zustand vertikal stufenlos gegenüber dem vertikalen Gestellabschnitt positionierbar ist.

Ein Benutzer des Beförderungsfahrzeugs kann folglich auf sehr komfortable Art und Weise die gewünschte Höhe der Auszugsanordnung einstellen. Dadurch, dass sich die Auszugsanordnung in einem am vertikalen Gestellabschnitt angebrachten Zustand in der Höhe verstellen lässt und dass dies stufenlos erfolgt, kann der Benutzer die Auszugsanordnung sehr bequem nach oben oder nach unten verschieben, bis die gewünschte Position erreicht ist. Eine Abnahme und erneute Anbringung der Auszugsanordnung ist für die Verstellung der Höhe nicht erforderlich. Der Befestigungsmechanismus ist, wie nachstehend noch im Detail erläutert, insbesondere derart ausgebildet, dass sich die Auszugsanordnung dann auf einfache Art und Weise - insbesondere werkzeuglos - in der gewünschten Position vertikal fixieren lässt.

Vorteilhafte Weiterbildungen sind Gegenstand der Unteransprüche.

Exemplarische Details und Ausführungsformen werden nachstehend unter Bezugnahme auf die Figuren erläutert. Dabei zeigt:
- Figur 1: ein Beförderungsfahrzeug mit Auszugsanordnung,
- Figur 2: eine Beförderungsvorrichtung mit Auszugsanordnung und eingesetztem Behälter,
- Figur 3: ein Beförderungsfahrzeug mit ausgefahrener Auszugsanordnung,
- Figur 4: eine Beförderungsvorrichtung mit einem vertikalen Stapel von Behältern,
- Figur 5: eine Explosionsdarstellung von Komponenten eines Befestigungsmechanismus,
- Figur 6: eine weitere Explosionsdarstellung von Komponenten des Befestigungsmechanismus,
- Figur 7: eine Schnittdarstellung des Befestigungsmechanismus,
- Figur 8: eine weitere Schnittdarstellung des Befestigungsmechanismus,
- Figur 9: eine weitere Schnittdarstellung des Befestigungsmechanismus,
- Figur 10: eine Rückansicht der Beförderungsvorrichtung mit angebrachtem Arbeitstisch,
- Figur 11: eine Detailansicht eines Befestigungselements des Arbeitstischs,
- Figur 12: die Beförderungsvorrichtung in einer Arbeitskonfiguration,
- Figur 13: einen kastenförmigen Behälter,
- Figur 14: einen Schnitt durch einen an dem Beförderungsfahrzeug angebrachten Behälter und
- Figur 15: einen auf einer Stellfläche des Beförderungsfahrzeugs abgestellten Behälter.

Bei den nachfolgenden Erläuterungen wird auf die in den Figuren eingezeichnete x-Richtung, y-Richtung und z-Richtung Bezug genommen. Die x-Richtung, y-Richtung und z-Richtung sind orthogonal zueinander ausgerichtet. Die x-Richtung kann auch als Querrichtung, die y-Richtung auch als Längsrichtung und die z-Richtung auch als Vertikalrichtung bezeichnet werden. Ferner können die x-Richtung und die y-Richtung auch als horizontale Richtungen bezeichnet werden. Das Bezugssystem für die Richtungen ist das Beförderungsfahrzeug 2 bzw. die Beförderungsvorrichtung 1 in einer aufrechten Stellung.

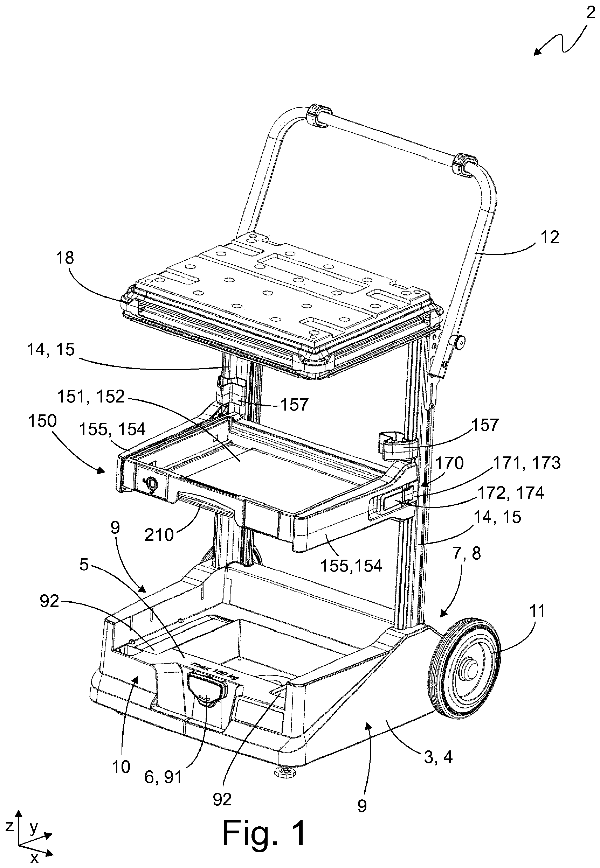

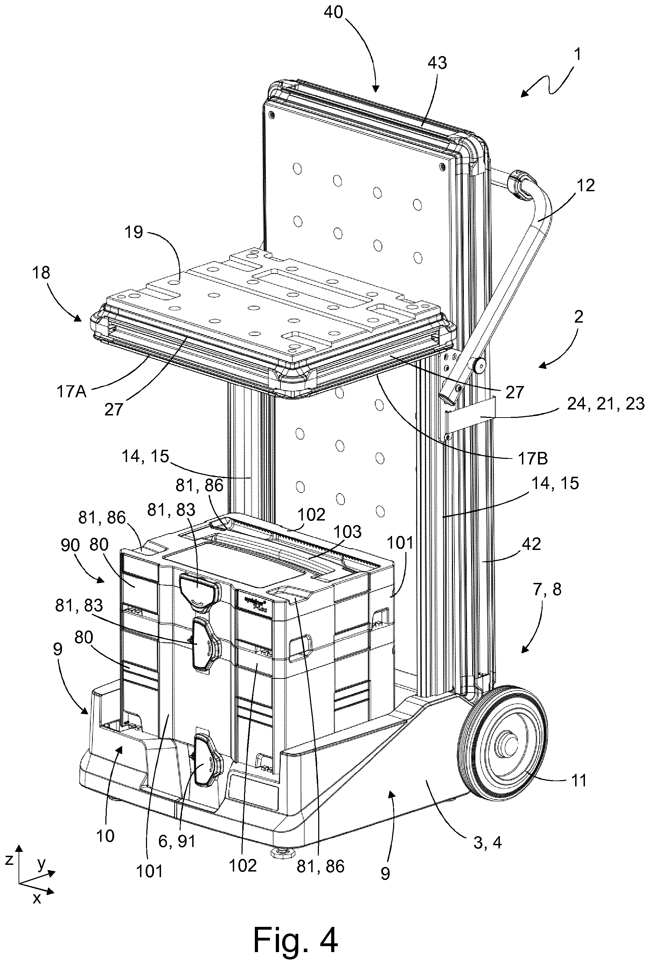

Die Figur 1 zeigt ein Beförderungsfahrzeug 2, das einen Fahrzeugkörper mit einem unteren Abschnitt 3 und einem sich von dem unteren Abschnitt 3 nach oben erstreckenden vertikalen Gestellabschnitt 14 umfasst. Der untere Abschnitt 3 verfügt über eine Stellfläche 5 und über eine Behälter-Befestigungsschnittstelle 6, mit der der erste kastenförmige Behälter 80 in einem auf der Stellfläche 5 abgestellten Zustand an dem unteren Abschnitt 3 befestigbar ist. Ein auf der Stellfläche 5 abgestellter und mit der Behälter-Befestigungsschnittstelle 6 befestigter Behälter 80 ist beispielsweise in der Figur 4 zu sehen.

Das Beförderungsfahrzeug 2 umfasst ferner einen am Fahrzeugkörper angeordneten Griff 12, mit dem das Beförderungsfahrzeug 2 in eine Kippstellung versetzbar ist, und zwei am unteren Abschnitt 3 angeordnete Räder 11, mit denen das Beförderungsfahrzeug 2 in der Kippstellung gegenüber einem Boden abgestützt und relativ zum Boden bewegt werden kann.

Das Beförderungsfahrzeug 2 weist oberhalb der Behälter-Befestigungsschnittstelle 6 eine am vertikalen Gestellabschnitt 14 angeordnete Auszuganordnung 150 mit einem horizontal ausziehbaren Behälter-Aufnahmeelement 152 zur Aufnahme des kastenförmigen Behälters 80 auf. Die Auszugsanordnung 150 umfasst einen Befestigungsmechanismus 170, mit dem die Auszugsanordnung 150 in einem am vertikalen Gestellabschnitt 14 angebrachten Zustand vertikal stufenlos gegenüber dem vertikalen Gestellabschnitt 14 positionierbar und insbesondere fixierbar ist.

Nachstehend werden weitere exemplarische Details erläutert.

Zunächst zum Grundaufbau des Beförderungsfahrzeugs 2:
Das Beförderungsfahrzeug 2 ist in der Figur 1 für sich genommen - also ohne den kastenförmigen Behälter 80 - gezeigt. Das Beförderungsfahrzeug 2 weist eine querseitige Vorderseite 10, zwei Längsseiten 9 und eine querseitige Rückseite 8 auf.

Das Beförderungsfahrzeug 2 kann eine Standstellung einnehmen, in der es stabil auf dem Boden steht. In der Standstellung ist der untere Abschnitt 3 parallel zum Boden ausgerichtet und der vertikale Gestellabschnitt 14 ist senkrecht zum Boden ausgerichtet. Das Beförderungsfahrzeug 2 kann ferner eine Fahrstellung einnehmen, in der es relativ zum Boden verkippt ist, beispielsweise um ca. 45 Grad. In der Fahrstellung lässt sich das Beförderungsfahrzeug 2 durch manuelles Schieben oder Ziehen in Bewegung versetzen. Das Beförderungsfahrzeug 2 lässt sich folglich wie eine Sackkarre handhaben und kann auch als sackkarrenartig bezeichnet werden.

Das Beförderungsfahrzeug 2 (ohne den Griff 12) bzw. der exemplarisch aus dem unteren Abschnitt 3, dem vertikalen Gestellabschnitt 14 und einem integrierten Tisch 18 bestehende Fahrzeugkörper hat in einer y-z-Seitenansicht im Wesentlichen die Form eines um 90 Grad gedrehten U bzw. die Form eines C. Der untere Abschnitt 3 und der integrierte Tisch 18 stellen in einer y-z-Seitenansicht jeweils horizontale Schenkel dar, die durch den vertikalen Gestellabschnitt 14, zweckmäßigerweise nur durch den vertikalen Gestellabschnitt 14, verbunden sind.

Der untere Abschnitt 3 und der vertikale Gestellabschnitt 14 bilden zusammen (ohne den Griff 12) in einer y-z-Seitenansicht eine im Wesentlichen L-förmige Struktur.

Mit der Auszugsanordnung 150 weist das Beförderungsfahrzeug 2 (ohne den Griff 12) in einer y-z-Seitenansicht im Wesentlichen die Form eines E auf. Der untere Abschnitt 3, die Auszugsanordnung 150 und der integrierte Tisch 18 stellen dabei horizontale Schenkel dar, die durch den vertikalen Gestellabschnitt 14 verbunden sind. Die Auszugsanordnung 150 ist in vertikaler Richtung zwischen dem unteren Abschnitt 3 und dem integrierten Tisch 18 angeordnet.

Sofern der (optionale) integrierte Tisch 18 nicht vorhanden ist, weist das Beförderungsfahrzeug 2 (ohne den Griff 12) in einer y-z-Seitenansicht im Wesentlichen die Form eines auf den Kopf gestellten F auf. Der untere Abschnitt 3 und die Auszugsanordnung 150 stellen dabei horizontale Schenkel dar, die durch den vertikalen Gestellabschnitt 14 verbunden sind.

Die Erstreckung des vertikalen Gestellabschnitts 14 in z-Richtung ist größer als die Erstreckung des unteren Abschnitts 3 in y-Richtung und größer als die Erstreckung des integrierten Tischs 18 in y-Richtung. Die y-Erstreckung des Unterteils 4 entspricht der y-Erstreckung des integrierten Tischs 18 und der y-Erstreckung der Auszugsanordnung 150 (in eingefahrener Stellung). Der vertikale Gestellabschnitt 14 nimmt vorzugsweise wenigstens 60%, insbesondere wenigstens 70% der z-Erstreckung des Fahrzeugkörpers oder des Beförderungsfahrzeugs 2 ohne den Griff 12 ein.

Der vertikale Gestellabschnitt 14 ist in dem rückwärtigen Bereich 7 des Beförderungsfahrzeugs 2 angeordnet. Zweckmäßigerweise ist der integrierte Tisch 18 und/oder die Auszugsanordnung 150 gegenüber dem unteren Abschnitt 3 nur durch den im rückwärtigen Bereich 7 angeordneten vertikalen Gestellabschnitt 14 abgestützt.

Der den unteren Abschnitt 3, den vertikalen Gestellabschnitt 14 und den integrierten Tisch 18 umfassende Fahrzeugkörper stellt vorzugsweise eine dauerhaft integere Struktur dar, die bei der Abnahme und/oder Anbringung eines kastenförmigen Behälters 80 an der Behälter-Befestigungsschnittstelle 6 unverändert bleibt. Ein Umbau des Fahrzeugkörpers, insbesondere des vertikalen Gestellabschnitts 14 und/oder des integrierten Tischs 18 ist zur Abnahme und/oder Anbringung des kastenförmigen Behälters 80 an der Behälter-Befestigungsschnittstelle 6 nicht erforderlich. Gleiches gilt für eine Abnahme und/oder Anbringung der Auszugsanordnung 150. Zweckmäßigerweise können der integrierte Tisch 18 und/oder der vertikale Gestellabschnitt 14 nicht werkzeuglos vom Fahrzeugkörper abgenommen werden.

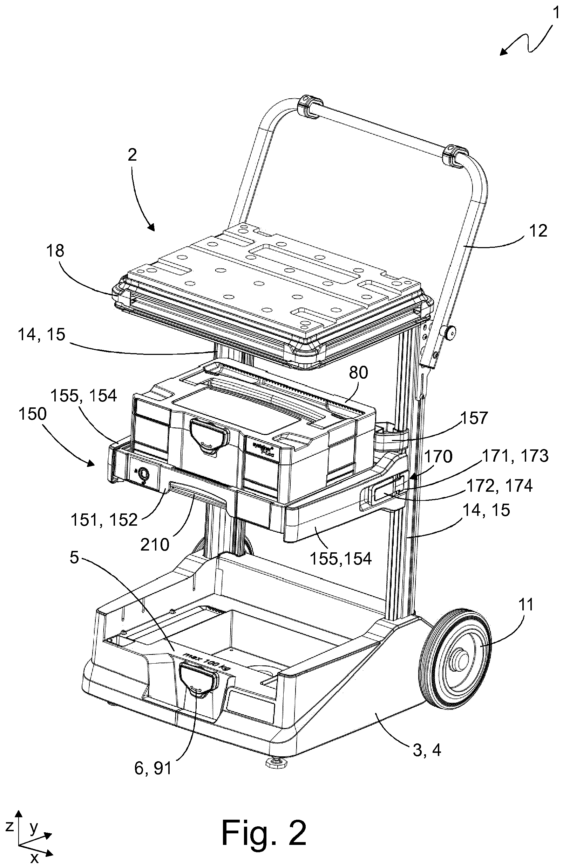

Im Folgenden soll näher auf die Auszugsanordnung 150 eingegangen werden:
Die Auszuganordnung 150 verfügt über das horizontal ausziehbare Behälter-Aufnahmeelement 152, in das der erste kastenförmige Behälter 80 von oben einsetzbar ist. Ein die das Behälter-Aufnahmeelement 152 eingesetzter Behälter 80 ist in der Figur 2 zu sehen.

Der erste kastenförmige Behälter 80 lässt sich insbesondere wahlweise an der Behälter-Befestigungsschnittstelle 6 befestigen oder in das Behälter-Aufnahmeelement 152 von oben einsetzen. Ist der kastenförmige Behälter 80 in das Behälter-Aufnahmeelement 152 eingesetzt, so lässt er sich zusammen mit dem Behälter-Aufnahmeelement 152 in horizontaler Richtung ausziehen.

Zweckmäßigerweise ist das Behälter-Aufnahmeelement 152 eine Schublade und/oder derart ausgebildet, dass der kastenförmige Behälter 80 werkzeuglos und/oder zumindest in vertikaler Richtung unbefestigt eingesetzt werden kann. Das Einsetzen des Behälters 80 in das Behälter-Aufnahmeelement 152 kann dementsprechend äußerst einfach und unkompliziert erfolgen, insbesondere ohne zusätzliche Benutzerbetätigung (beispielsweise einer Befestigungsvorrichtung) und/oder ohne dass die Auszugsanordnung und/oder der Fahrzeugkörper für das Einsetzen des Behälters umgebaut werden müsste.

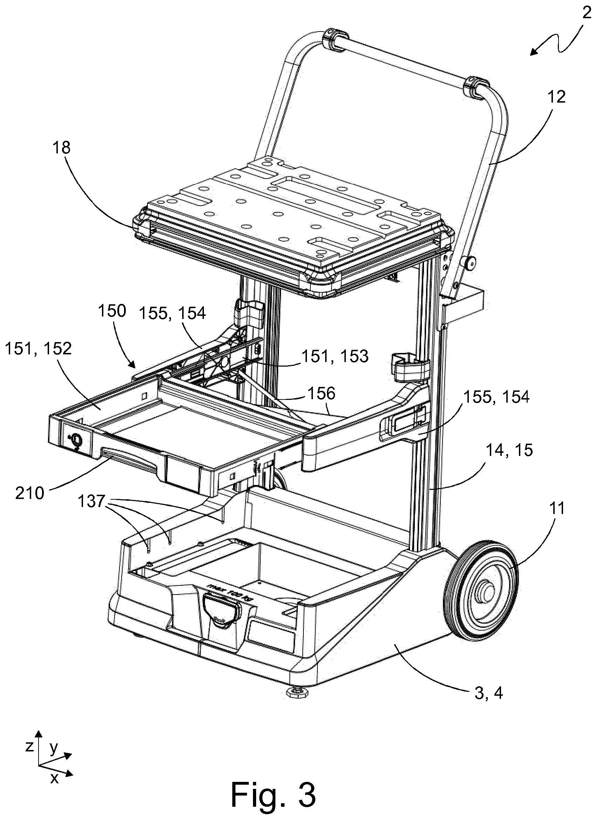

Die Auszugsanordnung 150 hat eine im Wesentlichen quaderförmige, flache Grundgestalt und ist horizontal ausgerichtet. Die Auszugsanordnung 150 umfasst eine Auszugseinheit 151, die einen Auszugsmechanismus 153, insbesondere einen Teleskopauszug, und das am Auszugsmechanismus 153 befestigte Behälter-Aufnahmeelement 152 umfasst. Der Auszugmechanismus 153 ist z.B. in Figur 3 zu sehen. Die Auszugsanordnung 150 umfasst ferner eine Trageanordnung 155, an der der Auszugsmechanismus 153 befestigt ist. Das Behälter-Aufnahmeelement 152 ist über den Auszugsmechanismus 153 relativ zur Trageanordnung 155 horizontal verschiebbar, insbesondere in y-Richtung. Die Trageanordnung 155 ist in horizontaler Richtung relativ zum vertikalen Gestellabschnitt 14 bzw. dem Beförderungsfahrzeug 2 fixiert.

Das Behälter-Aufnahmeelement 152 lässt sich relativ zur Trageanordnung 155, insbesondere relativ zum vertikalen Gestellabschnitt 14, in eine eingezogene und eine ausgezogene Position bewegen, insbesondere durch eine Bewegung in y-Richtung. Die Figur 1 zeigt das Behälter-Aufnahmeelement 152 in einer eingefahrenen Position und die Figur 3 zeigt das Behälter-Aufnahmeelement 152 in einer ausgefahrenen Position. Exemplarisch verfügt das Behälter-Aufnahmeelement 152 an seiner Vorderseite über einen Griff 210, mit dem es nach vorne hin ausgezogen werden kann.

In der eingefahrenen Position nimmt das Behälter-Aufnahmeelement 152 zweckmäßigerweise denselben x-y-Bereich ein wie der untere Abschnitt 3 und/oder der integrierte Tisch 18. In der ausgefahrenen Position nimmt das Behälter-Aufnahmeelement 152 zweckmäßigerweise auch einen x-y-Bereich ein, der in y-Richtung vor dem unteren Abschnitt 3 und/oder dem integrierten Tisch 18 liegt. Zweckmäßigerweise befindet sich das Behälter-Aufnahmeelement 152 in der ausgefahrenen Position mit wenigstens der Hälfte oder drei Vierteln seiner y-Erstreckung in y-Richtung vor dem unteren Abschnitt 3 und/oder dem integrierten Tisch 18.

Exemplarisch ist das Behälter-Aufnahmeelement 152 als Schublade ausgebildet. Das Behälter-Aufnahmeelement 152 ist nach oben hin offen, so dass der kastenförmige Behälter 80 von oben in das Behälter-Aufnahmeelement 152 eingesetzt werden kann. Vorzugsweise ist zum Einsetzten und/oder Herausnehmen des kastenförmigen Behälters 80 in/aus dem Behälter-Aufnahmeelement 152 keine Benutzerbetätigung irgendeiner Befestigungseinrichtung erforderlich. Der kastenförmige Behälter 80 wird zweckmäßigerweise einfach auf dem Aufnahmeboden des Behälter-Aufnahmeelements 152 abstellt, ohne dass der kastenförmige Behälter 80 an dem Behälter-Aufnahmeelement 152 befestigt wird. Der kastenförmige Behälter 80 ist in einem von dem Behälter-Aufnahmeelement 152 aufgenommenen Zustand somit insbesondere in vertikaler Richtung nicht befestigt bzw. lose.

Das Behälter-Aufnahmeelement 152 verfügt über den Aufnahmeboden, auf dem der kastenförmige Behälter 80 abgestellt werden kann. Von dem Aufnahmeboden erstrecken sich vorzugsweise vier Umfangswände nach oben, die zusammen mit dem Aufnahmeboden ein quaderförmiges, flaches Aufnahmevolumen definieren. Zweckmäßigerweise stabilisieren die vier Umfangswände den kastenförmigen Behälter 80 im eingesetzten Zustand seitlich. Die z-Erstreckung der Umfangswände ist zweckmäßigerweise geringer als die Hälfte oder geringer als ein Drittel der z-Erstreckung des kastenförmigen Behälters 80.

Der kastenförmige Behälter 80 weist an seiner Unterseite zweckmäßigerweise Standfüße auf, die insbesondere in den Eckbereichen des kastenförmigen Behälters 80 angeordnet sind. In dem Aufnahmeboden des Behälter-Aufnahmeelements 152 sind zweckmäßigerweise eine oder mehrere Vertiefungen zur Aufnahme der Standfüße vorhanden. Exemplarisch sind im Aufnahmeboden zwei sich in y-Richtung erstreckende, längliche Vertiefungen vorgesehen, die sich in x-Richtung jeweils im Randbereich des Aufnahmebodens befinden.

Vorzugsweise ist der erste kastenförmige Behälter 80 in einem eingefahrenen Zustand, zweckmäßigerweise in jedem eingefahrenen Zustand, und in einem ausgefahrenen Zustand, zweckmäßigerweise in jedem ausgefahrenen Zustand, des Behälter-Aufnahmelements 152 von oben in das Behälter-Aufnahmeelement 152 einsetzbar und/oder herausnehmbar. Zweckmäßigerweise ist der erste kastenförmige Behälter 80 in jedem eingefahrenen und/oder ausgefahrenen Zustand des Behälter-Aufnahmeelements 152 zugänglich, so dass z.B. der Deckel 102 des Behälters 80 geöffnet werden kann. Die Auszugsanordnung 150, insbesondere die Trageanordnung 155, ist nach oben hin offen ausgebildet, so dass das Behälter-Aufnahmeelement 152 und insbesondere ein in das Behälter-Aufnahmeelement 152 eingesetzter Behälter 80 auch im eingefahrenen Zustand des Behälter-Aufnahmeelements 152 zugänglich bleibt.

Die Trageanordnung 155 umfasst exemplarisch zwei sich von dem vertikalen Gestellabschnitt 14 horizontal nach vorne erstreckende Tragearme 154, an denen das Behälter-Aufnahmeelement 152 mittels des Auszugsmechanismus 153 verschiebbar gelagert ist. Die Tragearme 154 verlaufen parallel zu einander. Die y-Erstreckung der Tragearme 154 ist zweckmäßigerweise im Wesentlichen gleich der y-Erstreckung des Behälter-Aufnahmeelements 152 im eingefahrenen Zustand.

Wie nachstehend noch im Detail erläutert, weist der vertikale Gestellabschnitt 14 zwei parallel zueinander verlaufende, sich vertikal nach oben erstreckende vertikale Gestellelemente 15 auf. An jedem dieser vertikalen Gestellelemente 15 ist zweckmäßigerweise ein Tragearm 154 angeordnet.

Wie in der Figur 3 zu sehen, sind die beiden Tragearme 154 exemplarisch über zwei sich kreuzende, längliche Stabilisierungselemente 156 miteinander verbunden. Die Stabilisierungselemente 156 verlaufen vorzugsweise unterhalb des Behälter-Aufnahmeelements 152 und spannen zweckmäßigerweise eine horizontale Ebene auf.

Gemäß einer in den Figuren nicht gezeigten Ausführungsform umfasst das Beförderungsfahrzeug 2 über wenigstens zwei Auszugsanordnungen, die in vertikaler Richtung verteilt an dem vertikalen Gestellabschnitt 14 angeordnet sind. Die Auszugsanordnungen sind zweckmäßigerweise identisch zu der diskutierten Auszugsanordnung 150 ausgebildet und vorzugsweise übereinander am vertikalen Gestellabschnitt 14 angeordnet.

Nachfolgend soll auf den Befestigungsmechanismus 170 eingegangen werden, der zweckmäßigerweise Teil der Auszugsanordnung 150 ist. Der Befestigungsmechanismus 170 ist (von außen) z.B. in der Figur 1 zu sehen. Zweckmäßigerweise ist an jeder der beiden nach außen gerichteten Längsseiten der Auszugsanordnung 150, exemplarisch an jeder nach außen gerichteten Längsseite der Tragearme 154, ein entsprechender Befestigungsmechanismus 170 angeordnet.

Über den Befestigungsmechanismus 170 ist die Auszugsanordnung 150 am vertikalen Gestellabschnitt 14 in vertikaler Richtung werkzeuglos fixierbar. Der Befestigungsmechanismus 170 ist zweckmäßigerweise ausgebildet, die Auszugsanordnung 150 durch Festklemmen am vertikalen Gestellabschnitt 14 vertikal zu fixieren. Die vertikale Fixierung erfolgt vorzugsweise ausschließlich über Kraftschluss.

Zweckmäßigerweise ist der Befestigungsmechanismus 170 derart ausgebildet, dass sich die vertikale Fixierung durch Benutzerbetätigung lösen lässt. Ist die vertikale Fixierung gelöst, so lässt sich die Auszugsanordnung 150 in einem am vertikalen Gestellabschnitt 14 angebrachten Zustand vertikal stufenlos gegenüber dem vertikalen Gestellabschnitt 14 positionieren. Die Auszugsanordnung 150 lässt sich dabei an dem vertikalen Gestellabschnitt 14, insbesondere den beiden vertikalen Gestellelementen 15, wie auf Schienen (in vertikaler Richtung) stufenlos - also insbesondere kontinuierlich - verschieben und an gewünschter Stelle mit dem Befestigungsmechanismus 170 durch Festklemmen vertikal fixieren. Vorzugsweise ist die stufenlose Positionierung über die gesamte z-Erstreckung des vertikalen Gestellabschnitts 14 möglich.

Zweckmäßigerweise ist die Auszugsanordnung 150 über den Befestigungsmechanismus 170 ferner werkzeuglos vom vertikalen Gestellabschnitt 14 abnehmbar und/oder anbringbar. Vorzugsweise ist die Auszugsanordnung 150 in horizontaler Richtung, insbesondere in y-Richtung und/oder x-Richtung, per Formschluss am vertikalen Gestellabschnitt 14 befestigt. Zweckmäßigerweise lässt sich diese Befestigung, insbesondere dieser Formschluss, durch Betätigung des Befestigungsmechanismus 170 lösen.

Der Befestigungsmechanismus 170 verfügt über eine erste Bedieneinrichtung 171 zur werkzeuglosen Abnahme/Anbringung der Auszugsanordnung 150 vom vertikalen Gestellabschnitt 14 und eine zweite Bedieneinrichtung 172 zur werkzeuglosen vertikalen Fixierung der Auszugsanordnung 150 am vertikalen Gestellabschnitt 14. Die erste Bedieneinrichtung 171 ist insbesondere über ein erstes Bedienelement 173 betätigbar und die zweite Bedieneinrichtung 172 über ein zweites Bedienelement 174. Das erste Bedienelement 173 und/oder das zweite Bedienelement 174 sind vorzugsweise laschenförmig ausgeführt. Das erste Bedienelements 173 und/oder das zweite Bedienelement 174 sind zweckmäßigerweise verschwenkbar gelagert und können vorzugsweise zur Betätigung der jeweils zugehörigen Bedieneinrichtung 171, 172 verschwenkt werden. Zweckmäßigerweise ist das zweite Bedienelement 174 verschwenkbar am ersten Bedienelement 173 gelagert. Vorzugsweise ist an jedem Tragearm 154 ein entsprechendes erstes Bedienelement 173 ein entsprechendes zweites Bedienelement 174 vorhanden.

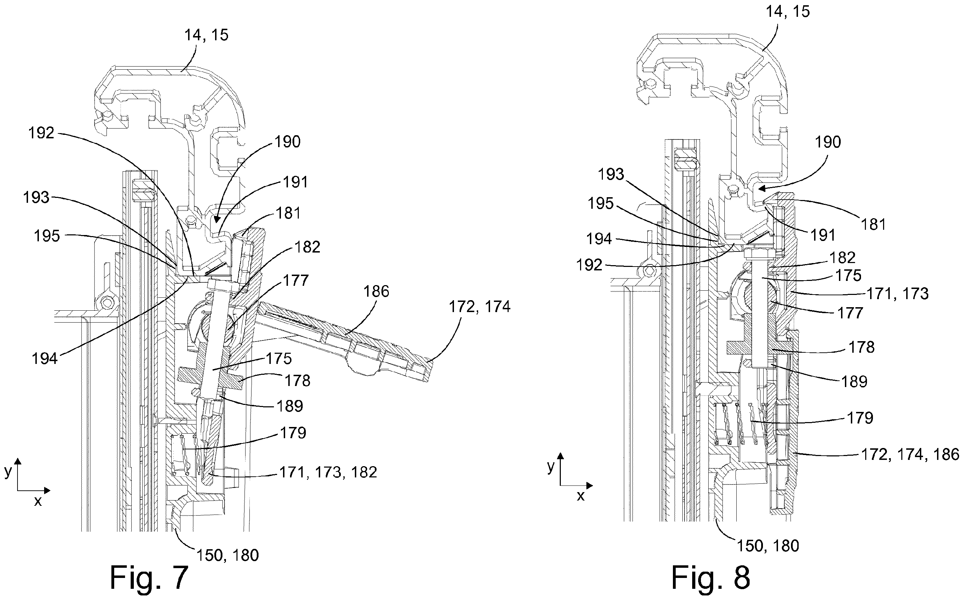

Wie in den Figuren 7 und 8 gezeigt, umfasst das erste Bedienelement 173 einen Befestigungsabschnitt 181, der durch Verschwenkung des ersten Bedienelements 173 in Eingriff mit einer am vertikalen Gestellabschnitt 14 vorhandenen Anlagefläche 191 gebracht werden kann, um die Auszugsanordnung 150 an dem vertikalen Gestellabschnitt 14 anzubringen. Exemplarisch Details diesbezüglich werden nachstehend noch erläutert.

Das erste Bedienelement 173 ist über eine Exzenter-Struktur 187 mit dem zweiten Bedienelement 174 gekoppelt, so dass bei Verschwenkung des zweiten Bedienelements 174 der an der Anlagefläche 191 anliegende Befestigungsabschnitt 181 in Richtung hin zur Anlagefläche 191 angezogen wird, so dass die Auszugsanordnung 150 am vertikalen Gestellabschnitt 14 festgeklemmt und dadurch vertikal fixiert wird. Exemplarisch Details diesbezüglich werden nachstehend noch erläutert.

Der Befestigungsmechanismus 170 verfügt über ein drittes Bedienelement 178, über das die Stärke der vertikalen Fixierung der Auszugsanordnung 150 am vertikalen Gestellabschnitt 14 eingestellt werden kann. Das dritte Bedienelement 178 umfasst zweckmäßigerweise eine Rändelmutter 178.

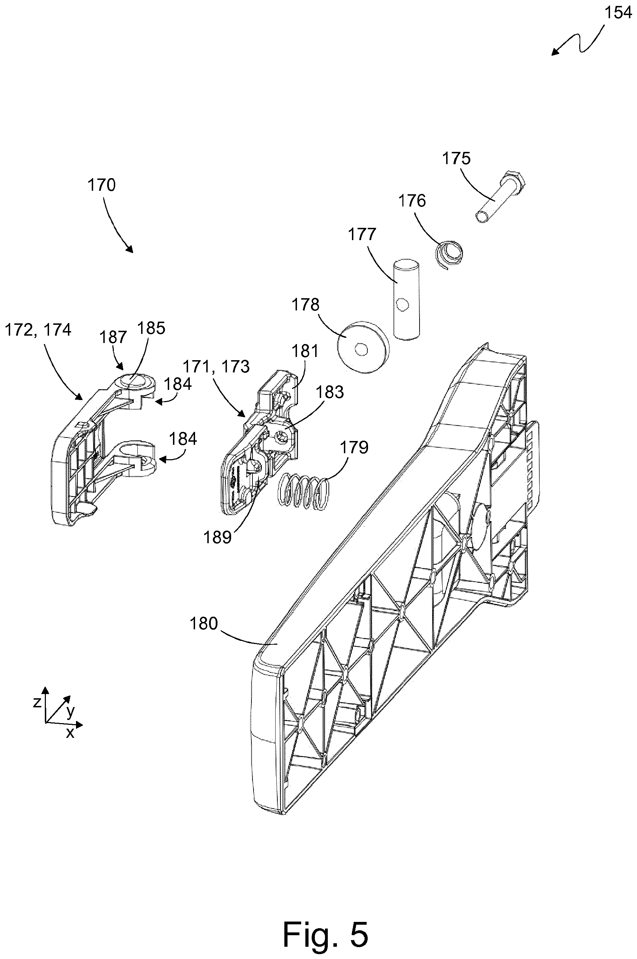

Im Folgenden soll unter Bezugnahme auf die Figuren 5 bis 9 auf eine exemplarische Ausgestaltung des Befestigungsmechanismus 170 eingegangen werden.

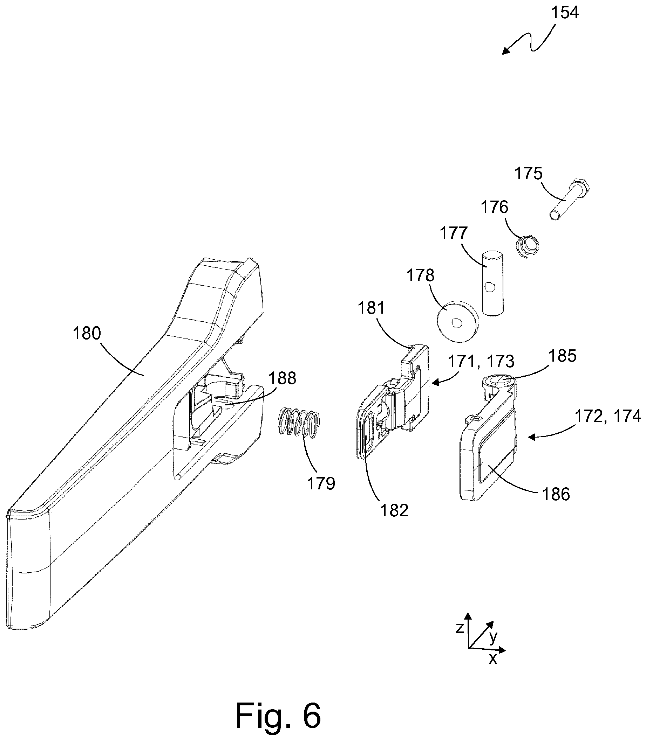

Die Figur 5 zeigt eine Explosionsdarstellung von Komponenten eines an einer linken Seite der Auszugsanordnung 150 angeordneten Befestigungsmechanismus 170 und die Figur 6 zeigt eine Explosionsdarstellung von Komponenten eines an einer rechten Seite der Auszugsanordnung 150 angeordneten Befestigungsmechanismus. Die beiden in den Figuren 5, 6 gezeigten Befestigungsmechanismen sind zweckmäßigerweise identisch und/oder zu einer y-z-Ebene spiegelsymmetrisch ausgeführt, so dass nachfolgend auf beide Befestigungsmechanismen gemeinsam eingegangen werden soll.

In der Figur 5 ist insbesondere ein länglicher Tragearmkörper 180 gezeigt, der zusammen mit dem Befestigungsmechanismus 170 einen Tragearm 154 bildet. Der längliche Tragearmkörper 180 ist zweckmäßigerweise als Spritzgussteil gefertigt.

In der Figur 6 ist die Außenseite eines Tragearmkörpers 180 zu sehen. Der Tragearmkörper 180 verfügt an seinem dem vertikalen Gestellabschnitt 14 proximalen Ende über eine Aussparung zur Aufnahme des Befestigungsmechanismus 170.

Der Befestigungsmechanismus 170 umfasst das erste Bedienelement 173, das exemplarisch laschenförmig ausgeführt ist. Wie in der Figur 5 zu sehen, verfügt das erste Bedienelement 173 über einen länglichen, sich in y-Richtung erstreckenden Basisabschnitt, von dem zwei beabstandete Kopplungsabschnitte 183, 189, in x-Richtung weg ragen. Jeder Kopplungsabschnitt 183, 189 verfügt über ein Loch.

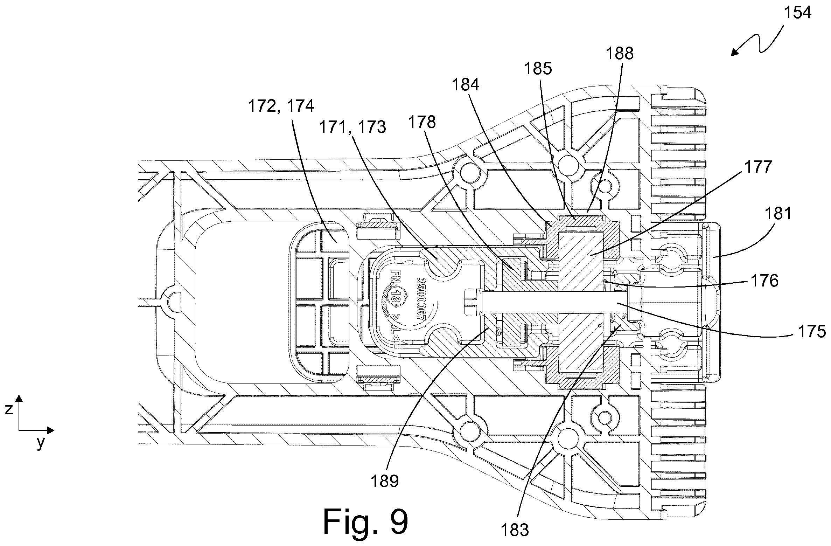

Die Figur 9 zeigt einen x-y-Schnitt durch einen Tragearm 154, der einen Befestigungsmechanismus 170 im montierten Zustand aufweist. Zwischen den beiden Kopplungsabschnitten 183, 189 ist vom ersten Kopplungsabschnitt 183 zum zweiten Kopplungsabschnitt 189 eine erste Feder 176, ein Bolzen 177 und die Rändelmutter 178 angeordnet. Eine Schraube 175 verläuft durch den ersten Kopplungsabschnitt 183, die erste Feder 176, den Bolzen 177, die Rändelmutter 178 und den zweiten Kopplungsabschnitt 189. In der Rändelmutter 178 ist ein Gewinde vorgesehen, in das die Schraube 175 geschraubt ist. Der Bolzen 177 verläuft quer zur Schraube 175.

In der Figur 5 ist ferner das zweite Bedienelement 174 gezeigt, das exemplarisch laschenförmig ausgeführt ist. Das zweite Bedienelement 174 verfügt über einen sich in y-Richtung erstreckenden Basisabschnitt, von dem an einem distalen Ende eine Kopplungsstruktur 187 abragt, die insbesondere als Exzenter-Struktur ausgebildet ist. Die Kopplungsstruktur 187 umfasst exemplarisch zwei im Wesentlichen zylindrische Strukturabschnitte, die koaxial zueinander angeordnet sind und außen über Drehlagerabschnitte 185 verfügen, die exemplarisch als kreisförmige Erhebungen ausgeführt sind. An der Innenseite der Strukturabschnitte sind Bolzen-Aufnahmeabschnitte 184 angeordnet, in die der Bolzen 177 eingesetzt werden kann. Zweckmäßigerweise ist der Bolzen 177 im montierten Zustand in die Bolzen-Aufnahmeabschnitte 184 eingerastet. Vorzugsweise ist das zweite Bedienelement 174 über den Bolzen 177 und die Schraube 175 am ersten Bedienelement 173 verschwenkbar gelagert.

Mit den Drehlagerabschnitten 185 ist das zweite Bedienelement 174 (mit angebrachtem ersten Bedienelement 173 sowie den vorstehend genannten Komponenten 175 bis 178) in die am Tragearmkörper 180 vorhandene Aussparung, insbesondere an Drehlager-Aufnahmeabschnitten 188, einsetzbar. Zwischen einem am distalen Ende des ersten Bedienelements 173 angeordneten Betätigungsabschnitt 182 und dem Tragearmkörper 180 ist zweckmäßigerweise eine zweite Feder 179 angeordnet.

Die Figur 9 zeigt, wie die Drehlagerabschnitte 185 in die Drehlager-Aufnahmeabschnitte 188 eingesetzt sind. In diesem Zustand ist das zweite Bedienelement 174 um eine durch die Drehlagerabschnitte 185 definierte, in z-Richtung verlaufende Drehachse verschwenkbar an der Auszugsanordnung 150, insbesondere dem Tragearmkörper 180, gelagert.

Unter Bezugnahme auf die Figuren 7 und 8 soll im Folgenden die Funktionsweise des exemplarischen Befestigungsmechanismus 170 erläutert werden. Die Figuren 7 und 8 zeigen x-y-Schnitte des Befestigungsmechanismus 170. Gezeigt ist dabei der an der rechten Längsseite der Auszugsanordnung 150 angeordnete Befestigungsmechanismus 170. Zweckmäßigerweise wird der an der linken Längsseite der Auszugsanordnung 150 angeordnete Befestigungsmechanismus 170 (sofern vorhanden) in Entsprechung dazu betätigt.

Zweckmäßigerweise lässt sich der Befestigungsmechanismus 170 in drei verschiedene Zustände versetzen: einen ersten Zustand, in dem die erste Bedieneinrichtung 171 und die zweite Bedieneinrichtung 172 unbetätigt sind, einen zweiten Zustand, in dem die erste Bedieneinrichtung 171 betätigt ist und die zweite Bedieneinrichtung 172 unbetätigt ist und einen dritten Zustand, in dem die erste Bedieneinrichtung 171 betätigt und die zweite Bedieneinrichtung 172 unbetätigt ist. Zweckmäßigerweise überdeckt die zweite Bedieneinrichtung 172 in betätigter Stellung den Betätigungsabschnitt 182 der ersten Bedieneinrichtung 171, so dass die erste Bedieneinrichtung 171 in diesem Zustand nicht betätigt werden kann.

Eine Betätigung der ersten Bedieneinrichtung 171 erfolgt zweckmäßigerweise dadurch, dass der Betätigungsabschnitt 182 in x-Richtung nach Innen gedrückt wird, beispielsweise durch den Finger eines Benutzers. Der Betätigungsabschnitt 182 befindet sich zweckmäßigerweise außen am ersten Bedienelement 173, an dem dem Befestigungsabschnitt 181 abgewandten distalen Ende. Durch Betätigung des Betätigungsabschnitts 182 wird das erste Bedienelement 173 um eine parallel zur z-Richtung verlaufende Drehachse verschwenkt. Durch Loslassen des Betätigungsabschnitts 182 wird das erste Bedienelement 173 aufgrund der zweiten Feder 179 automatisch wieder zurück verschwenkt und nimmt seine unbetätigte Stellung ein. In der Figur 7 ist das erste Bedienelement 173 in der betätigten Stellung und in der Figur 8 in der unbetätigten Stellung gezeigt.

In der unbetätigten Stellung der zweiten Bedieneinrichtung 172 ist das zweite Bedienelement 174 um eine parallel zur z-Richtung verlaufende Drehachse verschwenkt und ragt insbesondere in eine x-y-Richtung nach außen ab. Diese Stellung soll als unbetätigte Stellung bezeichnet werden und ist z.B. in der Figur 7 gezeigt. Der nach außen abragende Abschnitt soll auch als Betätigungsabschnitt 186 bezeichnet werden. Durch Benutzerbetätigung kann das zweite Bedienelement 174 um seine Drehachse verschwenkt werden, so dass es an der äußeren Längsseite der Auszugsanordnung 150, insbesondere dem Tragearm 154, anliegt und die betätigte Stellung einnimmt, die z.B. in der Figur 8 gezeigt ist. Diese Stellung des zweiten Bedienelements 174 ist stabil, so dass es einer weiteren Benutzerbetätigung des Betätigungsabschnitts 186 bedarf, um das zweite Bedienelement 174 zurück in die unbetätigte Stellung zu versetzen. Zweckmäßigerweise durchläuft das Bedienelement 174 zwischen betätigter und unbetätigter Stellung einen Totpunkt.

Wie in der Figur 7 gezeigt, liegt die Auszugsanordnung 150, insbesondere der Tragearmkörper 180, mit einer ersten, insbesondere querseitigen, Anlagefläche 194 und einer zweiten, insbesondere längsseitigen, Anlagefläche 195 an einer entsprechenden ersten, insbesondere querseitigen, Anlagefläche 192 des vertikalen Gestellelements 15 und einer zweiten, insbesondere längsseitigen, Anlagefläche 193 des vertikalen Gestellelements 15 an. Die Anlageflächen 192, 193 befinden sich zweckmäßigerweise auf der Innenseite des vertikalen Gestellelements 15. Auf der Außenseite verfügt das vertikale Gestellelements 15 zweckmäßigerweise über die Anlagefläche 191, die auch als dritte Anlagefläche 191 bezeichnet werden soll. Die dritte Anlagefläche 191 ist exemplarisch Teil einer Nut 190, insbesondere einer U-Nut, die vorzugsweise außenseitig am vertikalen Gestellelement 15 angeordnet ist.

Die vorgenannten Anlageflächen 191, 192, 193 erstrecken sich zweckmäßigerweise über wenigstens die halbe, vorzugsweise über die gesamte z-Erstreckung des vertikalen Gestellabschnitts 14.

Das erste Bedienelement 173 verfügt über den exemplarisch hakenförmig ausgeführten Befestigungsabschnitt 181 der, wie in der Figur 8 zu sehen, im unbetätigten Zustand der ersten Bedieneinrichtung 171 mit der dritten Anlagefläche 191 in Eingriff steht (dadurch, dass er in die Nut 190 greift) und so die Auszugsanordnung 150 durch Formschluss am vertikalen Gestellabschnitt 14 angebracht ist. Wie in der Figur 7 zu sehen, lässt sich der Eingriff des Befestigungsabschnitts 181 durch Betätigung des ersten Bedienelements 173 lösen, so dass die Auszugsanordnung 150 insbesondere in y-Richtung nicht mehr am vertikalen Gestellabschnitt 14 befestigt ist und sich in dieser Richtung vollständig vom vertikalen Gestellabschnitt 14 abnehmen lässt.

Zur erneuten Anbringung der Auszugsanordnung 150 an dem vertikalen Gestellabschnitt 14 ist das erste Bedienelement 173 wieder zu betätigen, so dass der Befestigungsabschnitt 181 in das vertikalen Gestellelement 15 einrasten kann.

Ist die Auszugsanordnung 150 an dem vertikalen Gestellabschnitt 14 angebracht bzw. in diese eingehängt, so bedarf es zweckmäßigerweise der Betätigung des zweiten Bedienelements 174, um die Auszugsanordnung 150 vertikal zu fixieren. Aufgrund der Exzenter-Struktur 187 wird durch Verschwenkung des zweiten Bedienelements 174 das erste Bedienelement 173 mit seinem Befestigungsabschnitt 181 gegen die dritte Anlagefläche 191 angezogen, so dass zwischen dem Befestigungsabschnitt 181 und der ersten Anlagefläche 194 eine Klemmung des vertikalen Gestellabschnitts 15 erfolgt. Die Auszugsanordnung 150 ist somit am vertikalen Gestellabschnitt 14 festgeklemmt und kann in z-Richtung nicht mehr am vertikalen Gestellabschnitt 14 verschoben werden. Die Stärke bzw. die Klemmkraft der Fixierung kann über ein drittes Bedienelement, insbesondere die Rändelmutter 178, eingestellt werden, über die das erste Bedienelement 173 - und damit der Befestigungsabschnitt 181 - relativ zum Tragearmkörper 180 - und damit zur Anlagefläche 194 positioniert werden kann.

Wie in den Figuren 1 und 2 zu sehen, können am vertikalen Gestellabschnitt 14 oberhalb der Auszugsanordnung 150 ferner Fixierelemente 157 angeordnet sein, die dazu dienen, einen eingesetzten Behälter 80 horizontal zu stabilisieren. Die Fixierelemente 157 sind insbesondere vertikal verschiebbar und/oder verfügen über eckförmige Aussparungen zur Aufnahme der hinteren Eckbereiche des Behälters 80.

Im Folgenden soll näher auf die am unteren Abschnitt 3 vorhandene Behälter-Befestigungsschnittstelle 6 eingegangen werden.

Die Behälter-Befestigungsschnittstelle 6 dient dazu, den kastenförmigen Behälter 80 an dem unteren Abschnitt 3 des Beförderungsfahrzeugs 2 zu befestigen, vorzugsweise derart, dass der kastenförmige Behälter 80 in sämtliche Raumrichtungen fixiert ist. Zweckmäßigerweise ist die Behälter-Befestigungsschnittstelle 6 derart ausgebildet, dass sich der Behälter 80 werkzeuglos an der Behälter-Befestigungsschnittstelle 6 befestigen und/oder von dieser lösen lässt.

Exemplarisch umfasst die Behälter-Befestigungsschnittstelle 6 ein bewegliches, durch Benutzerbetätigung wahlweise in eine Verriegelungsstellung oder eine Freigabestellung versetzbares Kopplungselement 91. In der Verriegelungsstellung steht das Kopplungselement 91 in Eingriff mit einer am kastenförmigen Behälter 80 angeordneten ersten nicht-beweglichen Kopplungsstruktur. In der Freigabestellung gibt das Kopplungselement 91 die erste nicht-bewegliche Kopplungsstruktur frei, so dass der kastenförmige Behälter 80 von dem unteren Abschnitt 4 abgenommen werden kann.

Das bewegliche Kopplungselement 91 ist exemplarisch als Drehriegel, insbesondere als T-förmiger Drehriegel, ausgebildet. Vorzugsweise ist das bewegliche Kopplungselement 91 ein am unteren Abschnitt 3 beweglich angebrachter, selbst starrer Körper. Das bewegliche Kopplungselement 91 lässt sich manuell in verschiedene Drehstellungen versetzen, um die Befestigung des Behälters 80 an dem Beförderungsfahrzeug 2 wahlweise herzustellen oder zu lösen.

Das bewegliche Kopplungselement 91 ist exemplarisch an der Vorderseite 10 des unteren Abschnitts 3 angebracht und vorzugsweise drehbar gelagert, insbesondere um eine y-Drehachse. Das bewegliche Kopplungselement 91 ist zweckmäßigerweise in einer Einbuchtung an der Vorderseite 10 angeordnet.

Die Behälter-Befestigungsschnittstelle 6 umfasst vorzugsweise ferner eine nicht-bewegliche Kopplungsstruktur 92, die exemplarisch als in der Stellfläche 5 angeordnete Vertiefungen ausgebildet ist. Exemplarisch umfasst die nicht-bewegliche Kopplungsstruktur 92 zwei im Bereich der Längsseiten 9 angeordnete längliche Vertiefungen, die sich in y-Richtung erstrecken. Die nicht-bewegliche Kopplungsstruktur 92 lässt sich in Eingriff mit nachstehend noch erläuterten unteren Behälter-Kopplungsmitteln 82 bringen.

Vorzugsweise ist die Behälter-Befestigungsschnittstelle 6 und/oder der Behälter 80 derart ausgebildet, dass der Behälter 80 in einem an dem Beförderungsfahrzeug 2 fixierten Zustand mit seiner Unterseite und Vorderseite, insbesondere nur mit seiner Unterseite und Vorderseite, an dem Beförderungsfahrzeug 2 befestigt ist.

Nachstehend soll der kastenförmige Behälter 80 näher erläutert werden, insbesondere unter Bezugnahme auf die Figur 4.

Aus Gründen der besseren Sichtbarkeit ist in der Figur 4 die Auszugsanordnung 150 nicht gezeigt.

Der Behälter 80 verfügt über eine quaderförmige Grundgestalt. Exemplarisch verfügt der Behälter 80 über ein Unterteil 101 und einen auf das Unterteil 101 aufgesetzten Deckel 102. Der Deckel 102 ist zweckmäßigerweise an dem Unterteil 101 angelenkt, insbesondere an dessen Rückseite. Vorzugsweise weisen das Unterteil 101 und der Deckel 102 die gleiche horizontale Außenkontur auf. An der Oberseite des Behälters 80 ist exemplarisch ein Tragegriff 103 vorgesehen, der insbesondere ausklappbar ist. Der Tragegriff 103 ist rein optional und kann auch weggelassen werden.

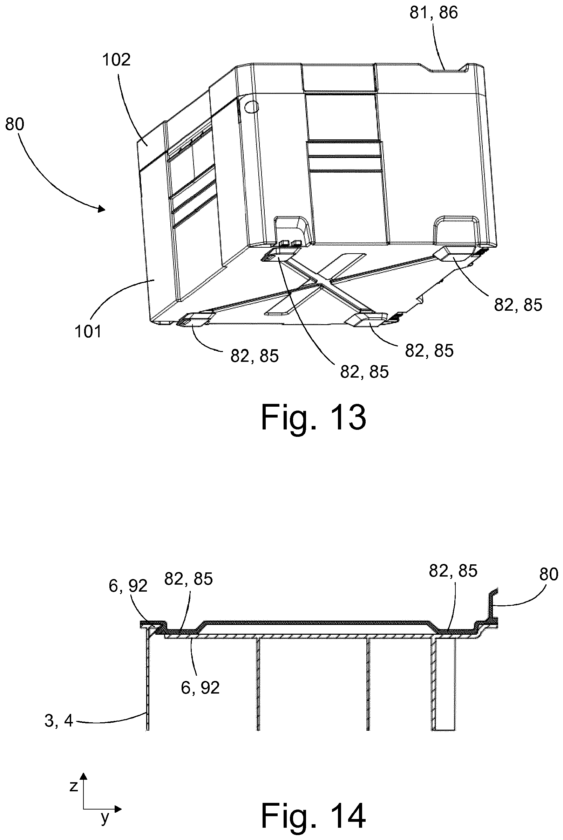

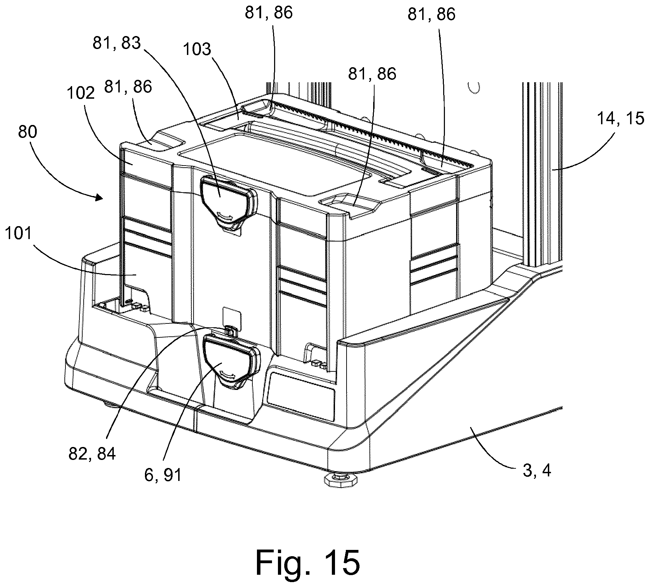

Der Behälter 80 verfügt über obere Behälter-Kopplungsmittel 81 und untere Behälter-Kopplungsmittel 82, die insbesondere in den Figuren 13 bis 15 zu sehen sind. Exemplarisch sind die oberen Behälter-Kopplungsmittel 81 in Entsprechung zu den unteren Behälter-Kopplungsmitteln 82 ausgebildet, so dass sich ein weiterer, mit identischen Behälter-Kopplungsmitteln ausgestatteter Behälter 80 auf den vorliegenden Behälter 80 aufsetzen lässt und mit den unteren Behälter-Kopplungsmitteln 82 des weiteren Behälters 80 an den oberen Behälter-Kopplungsmitteln 81 des vorliegenden Behälters 80 befestigen lässt, insbesondere derart, dass die beiden Behälter 80 in sämtliche Raumrichtungen zueinander fixiert sind und einen stabilen vertikalen Stapel 90 bilden.

Die unteren Behälter-Kopplungsmittel 82 umfassen insbesondere eine erste nicht-bewegliche Kopplungsstruktur 84, beispielsweise einen Kopplungsvorsprung, der mit dem beweglichen Kopplungselement 91 in Eingriff gebracht werden kann. Die nicht-bewegliche Kopplungsstruktur 84 ist insbesondere an der Vorderseite des Behälters 80 angeordnet.

Die unteren Behälter-Kopplungsmittel 82 umfassen ferner eine zweite nicht-bewegliche Kopplungsstruktur 85, beispielsweise Standfüße, die mit der nicht-beweglichen Kopplungsstruktur 92 in Eingriff gebracht werden können und an der Unterseite des Behälters 80 angeordnet sind.

Die Figur 14 zeigt einen vertikalen Schnitt durch den kastenförmigen Behälter 80 in einem Zustand, in dem dessen als Standfüße ausgebildete zweite nicht-bewegliche Kopplungsstruktur 85 mit der nicht-beweglichen Kopplungsstruktur 92 der Behälter-Schnittstelle 6 in Eingriff steht. Exemplarisch verfügt die nicht-bewegliche Kopplungsstruktur 92 einen Vorsprung, der von den Standfüßen, insbesondere den hinteren Standfüßen, zweckmäßigerweise nur den hinteren Standfüßen, hintergriffen wird.

Die oberen Behälter-Kopplungsmittel 81 umfassen zweckmäßigerweise ein bewegliches Kopplungselement 83, exemplarisch einen Drehriegel, insbesondere einen T-förmigen Drehriegel, der zweckmäßigerweise in Entsprechung zu dem beweglichen Kopplungselement 91 ausgebildet ist. Das bewegliche Kopplungselement 83 kann insbesondere mit der ersten nicht-beweglichen Kopplungsstruktur 84 eines weiteren Behälters 80 in Eingriff gebracht werden. Ferner kann das bewegliche Kopplungselement 83 dazu dienen, den Deckel 102 zu verriegeln.

Die oberen Behälter-Kopplungsmittel 81 umfassen ferner vorzugsweise eine dritte nicht-bewegliche Kopplungsstruktur 86. Die dritte nicht-bewegliche Kopplungsstruktur 86 kann zweckmäßigerweise mit der zweiten nicht-beweglichen Kopplungsstruktur 85 eines weiteren Behälters 80 in Eingriff gebracht werden. Die dritte nicht-bewegliche Kopplungsstruktur 86 umfasst vorzugsweise eine oder mehrere Vertiefungen und ist an der Oberseite des Behälters 80 angeordnet.

Der Behälter 80 ist insbesondere derart ausgebildet, dass der Behälter 80 in einem an einem weiteren Behälter 80 fixierten Zustand mit seiner Unterseite und Vorderseite, insbesondere nur mit seiner Unterseite und Vorderseite, an dem weiteren Behälter 80 befestigt ist.

Die vorstehend beschriebenen Behälter 80 können beispielsweise in Entsprechung zu den in der EP2315701B1 beschriebenen Behältern ausgebildet sein.

Exemplarisch ist in der Figur 4 ein vertikaler Stapel 90, der zwei aufeinander gestapelte und aneinander gekoppelte kastenförmige Behälter 80 umfasst, auf der Stellfläche 5 abgestellt und durch die Behälter-Befestigungsschnittstelle 6 an dem unteren Abschnitt 3 befestigt. Zweckmäßigerweise ist der Stapel 90 ausschließlich am unteren Abschnitt 3, insbesondere ausschließlich am Unterteil 4, befestigt.

Der in der Figur 4 auf der Stellfläche 5 abgestellte, untere Behälter 80 soll hier zweckmäßigerweise als erster Behälter 80 und der obere Behälter 80 als zweiter Behälter 80 bezeichnet werden. Ist an dem Beförderungsfahrzeug 2 in der Figur 4 die vorstehend diskutierte, exemplarisch in den Figuren 1 bis 3 gezeigte Auszugsanordnung 150 an dem vertikalen Gestellabschnitt 14 vorhanden, so lässt sich der zweite Behälter 80 in einem von dem ersten Behälter 80 abgenommenen Zustand wahlweise auf den ersten Behälter 80 abstellen und an diesem befestigen oder in das Behälter-Aufnahmeelement 152 der Auszugsanordnung 150 einsetzen.

Nachstehend soll näher auf den unteren Abschnitt 3 eingegangen werden:
Der untere Abschnitt 3 umfasst zweckmäßigerweise ein Unterteil 4. Zweckmäßigerweise bildet das Unterteil 4 den unteren Abschnitt 3. Das Unterteil 4 weist eine im Wesentlichen quaderförmige, insbesondere flache Grundgestalt auf. Die y-Erstreckung und die x-Erstreckung des Unterteils 4 sind jeweils wenigstens doppelt so groß wie die z-Erstreckung des Unterteils 4.

Von der Oberseite des Unterteils 4 aus erstreckt sich der vertikale Gestellabschnitt 14 nach oben. Auf der Oberseite des Unterteils 4 befindet sich die Stellfläche 5. Ferner befindet sich die Behälter-Befestigungsschnittstelle 6 an dem Unterteil 4, insbesondere ausschließlich an dem Unterteil 4.

Das Unterteil 4 umfasst exemplarisch einen als Spritzgussteil gefertigten, vorzugsweise einstückigen, Unterteilkörper, der die Stellfläche 5 bereitstellt.

Am Unterteil 4 ist vorzugsweise eine Auszug-Befestigungsschnittstelle 137 vorhanden, an die die Auszugeinheit 151 (in einem von der Trageanordnung 155 abgenommenen Zustand) befestigt werden kann, insbesondere über den Auszugmechanismus 153. Die Auszug-Befestigungsschnittstelle 137 ist exemplarisch in der Figur 3 gezeigt.

Die Auszugeinheit 151 kann zweckmäßigerweise auch ohne die Trageanordnung 155 und/oder zusätzlich zur Auszugsanordnung 150 bereitgestellt und direkt an der Auszug-Befestigungsschnittstelle 137 befestigt sein, so dass direkt am Unterteil 4 ein ausziehbares Behälter-Aufnahmeelement 152 bereitgestellt wird. Zweckmäßigerweise wird in diesem Zustand die Stellfläche 5 von der Auszugeinheit 151 verdeckt und kann nicht mehr zum Abstellen des kastenförmigen Behälters 80 verwendet werden.

Die Auszug-Befestigungsschnittstelle 137 ist exemplarisch an den Innenseiten der Schenkel einer U-förmigen Erhebung des Unterteils 4 angeordnet. Zweckmäßigerweise ist die U-förmige Erhebung derart ausgestaltet, dass die Auszugeinheit 151 in den zwischen den Schenkeln der U-förmigen Erhebung bereitgestellten Raum passt. Zweckmäßigerweise umfasst die Auszug-Befestigungsschnittstelle 137 an jeder Innenseite über wenigstens ein, insbesondere drei Löcher, mit denen die AuszugEinheit 151 über Schraubverbindungen an das Unterteil 4 befestigt werden kann.

Nachfolgend soll auf den vertikalen Gestellabschnitt 14 und den integrierten Tisch 18 eingegangen werden:
Der vertikale Gestellabschnitt 14 spannt eine x-z-Ebene auf. Exemplarisch umfasst der vertikale Gestellabschnitt 14 zwei längliche, sich von dem Unterteil 4 vertikal nach oben erstreckende, parallel zueinander verlaufende vertikale Gestellelemente 15. Vorzugsweise besteht der vertikale Gestellabschnitt 14 aus den beiden Gestellelementen 15.

Die beiden vertikalen Gestellelemente 15 nehmen jeweils denselben y- und z-Bereich ein und sind in x-Richtung zueinander versetzt. Die vertikalen Gestellelemente 15 sind in y-Richtung jeweils in der Nähe der Rückseite 8, also im rückwärtigen Bereich 7, angeordnet und befinden sich in x-Richtung im Bereich der Längsseiten 9. Die beiden vertikalen Gestellelemente 15 sind an der Oberseite des Unterteils 4 befestigt und erstrecken sich vertikal nach oben.

Die vertikalen Gestellelemente 15 sind exemplarisch als Profile, insbesondere als Metallprofile, ausgebildet.

Zweckmäßigerweise ist an dem vertikalen Gestellabschnitt 14, insbesondere den Gestellelementen 15, eine Positionsskala vorgesehen, die beispielsweise eine Vielzahl von horizontalen Strichen umfasst.

An den vertikalen Gestellabschnitt 14 schließt sich in z-Richtung der in den Fahrzeugkörper integrierte Tisch 18 an. Der integrierte Tisch 18 stellt den vertikal oberen Abschluss des Fahrzeugköpers - also insbesondere des Beförderungsfahrzeugs 2 ohne den Griff 12 - dar. Zweckmäßigerweise stellt der integrierte Tisch 18 den vertikal höchsten Punkt des Beförderungsfahrzeugs 2 ohne den Griff 12 dar. Der integrierte Tisch 18 ist optional vorgesehen. Anstelle des integrierten Tischs 18 könnte beispielsweise auch ein Versteifungselement zwischen den beiden vertikalen Gestellelementen 15 vorhanden sein.

Der integrierte Tisch 18 verfügt über vier längliche, horizontale Gestellelemente 17A, 17B. Die horizontalen Gestellelemente 17A, 17B sind exemplarisch als Profile, insbesondere als Metallprofile, ausgebildet. Die Gestellelemente 17 bilden zusammen einen horizontalen Gestellabschnitt in der Form eines rechteckigen Rahmens, auf dem die Tischplatte 19 des integrierten Tischs 18 angeordnet, insbesondere aufgesetzt, ist. Der integrierte Tisch 18 nimmt im Wesentlichen denselben x-y-Bereich wie das Unterteil 4 ein. Der integrierte Tisch 18 hat zweckmäßigerweise eine quaderförmige, insbesondere flache Grundgestalt.

Der horizontale Gestellabschnitt spannt eine x-y-Ebene auf, die orthogonal zu der von dem vertikalen Gestellabschnitt 14 aufgespannten x-z-Ebene ausgerichtet ist. Der horizontale Gestellabschnitt ist am oberen Ende des vertikalen Gestellabschnitts 14, exemplarisch an den beiden vertikalen Gestellelementen 15, befestigt. Der integrierte Tisch 18 ist insbesondere mit seinen beiden rückwärtigen Eckbereichen an den vertikalen Gestellelementen 15 befestigt.

Vorzugsweise verfügt der integrierte Tisch 18 über einen Abstützabschnitt 27, an dem der nachstehend noch näher erläuterte Arbeitstisch 40 in einer horizontalen Ausrichtung mit einem am Arbeitstisch 40 stirnseitig angebrachten Befestigungselement 41 abgestützt werden kann, um eine stabile Arbeitsstellung einzunehmen.

Der Abstützabschnitt 27 ist beispielsweise in der Figur 4 zu sehen und exemplarisch an einer, mehreren oder sämtlichen horizontalen Gestellelementen 17A, 17B vorhanden. Zweckmäßigerweise umfasst der Abstützabschnitt 27 eine Nut, insbesondere eine V-Nut, in die das Befestigungselement 41 eingreifen kann. Die Nut ist vorzugsweise nach oben hin geöffnet, so dass das Befestigungselement 41 von oben in die Nut eingreifen kann. Zweckmäßigerweise erstreckt sich die Nut über die gesamte Länge des horizontalen Gestellelements 17A, 17B.

Im Folgenden soll auf mögliche Konfigurationen der Beförderungsvorrichtung 1 eingegangen werden.

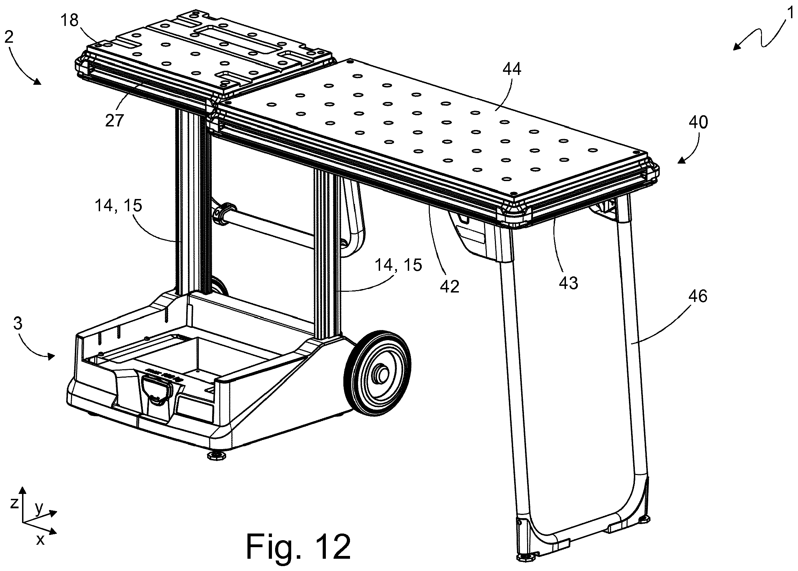

Die mit dem nachstehend noch erläuterten länglichen Arbeitstisch 40 ausgestatte Beförderungsvorrichtung 1 kann zweckmäßigerweise wenigstens zwei verschiedene Konfigurationen einnehmen: eine Transportkonfiguration, bei der der Arbeitstisch 40 wie in der Figur 4 gezeigt in vertikaler Ausrichtung an dem Beförderungsfahrzeug 2 befestigt ist und eine Arbeitskonfiguration, bei der der Arbeitstisch wie in der Figur 12 gezeigt in horizontaler Ausrichtung an dem integrierten Tisch 18 angebracht ist.

In der Transportkonfiguration ist der Arbeitstisch 40 (und/oder der kastenförmige Behälter 80) fest an dem Beförderungsfahrzeug 2 angebracht, so dass der Arbeitstisch 40 (und/oder der kastenförmige Behälter 80) auch in einer Fahrstellung, in der die Beförderungsvorrichtung 1 gegenüber dem Boden 30 verkippt ist, stabil am Beförderungsfahrzeug 2 befestigt sind und sich durch das Beförderungsfahrzeug 2 befördern lassen. Sämtliche Behälter 80 sind in der Transportkonfiguration (zweckmäßigerweise als vertikaler Stapel 90) an der Behälter-Befestigungsschnittstelle 6 befestigt.

Der längliche Arbeitstisch 40 kann zweckmäßigerweise vollständig von dem Beförderungsfahrzeug abgenommen werden, insbesondere werkzeuglos.

Der längliche Arbeitstisch 40 ist mittels einer nachstehend erläuterten Arbeitstisch-Befestigungsschnittstelle 24 in einer vertikalen Ausrichtung in dem rückwärtigen Bereich 7 an dem Beförderungsfahrzeug 2 werkzeuglos befestigbar, um eine Transportstellung einzunehmen, in der der längliche Arbeitstisch 40 durch das Beförderungsfahrzeug 2 beförderbar ist.

Wie in der Figur 1 zu sehen, ist der Arbeitstisch 40 in der Transportstellung mit seiner Längsachse vertikal - also in z-Richtung - ausgerichtet. Die Tischebene des Arbeitstischs 40 ist in der Transportstellung parallel zu einer x-z-Ebene ausgerichtet. Die x-Erstreckung des Arbeitstischs 40 entspricht der x-Erstreckung des vertikalen Gestellabschnitts 14. In der Transportstellung liegt der Arbeitstisch 40 an dem vertikalen Gestellabschnitt 40 an und nimmt zweckmäßigerweise denselben x-Bereich wie der vertikale Gestellabschnitt 40 ein. In z-Richtung erstreckt sich der Arbeitstisch 40 in der Transportstellung von dem Unterteil 4 nach oben und überragt vorzugsweise das Beförderungsfahrzeug 2, insbesondere den integrierten Tisch 18 und/oder den Griff 12.

Der Arbeitstisch 40 ist in der Transportstellung in rückwärtiger Richtung - also in y-Richtung hin zu der Rückseite 8 - hinter dem vertikalen Gestellabschnitt 14 angeordnet. In y-Richtung befindet sich der Arbeitstisch 40 in der Transportstellung auf der der Rückseite 8 zugewandten Seite des vertikalen Gestellabschnitts 14. Die Stellfläche 5 befindet sich exemplarisch auf der anderen Seite - also auf der der Vorderseite 10 zugewandten Seite des vertikalen Gestellabschnitts 14.

In der Transportkonfiguration ist ferner vorzugsweise die (in der Figur 4 nicht gezeigte) Auszugsanordnung 150 an dem vertikalen Gestellabschnitt 14 angebracht. Im Behälter-Aufnahmeelement 152 ist zweckmäßigerweise kein Behälter 80 eingesetzt.

Die Figur 12 zeigt die Beförderungsvorrichtung 1 in einer Arbeitskonfiguration. In der Arbeitskonfiguration ist der Arbeitstisch 40 von der Arbeitstisch-Befestigungsschnittstelle 24 abgenommen. Ferner befindet sich der Arbeitstisch 40 in einer horizontalen Ausrichtung; d.h. seine Tischebene ist parallel zu einer x-y-Ebene ausgerichtet. Die in der Figur 12 gezeigte Stellung des Arbeitstischs 40 kann auch als stationäre Arbeitsstellung bezeichnet werden. In der Arbeitsstellung wird der Arbeitstisch 40 an einer seiner Stirnseiten von dem Beförderungsfahrzeug 2 abgestützt, insbesondere von dem integrierten Tisch 18. Auf der dem Beförderungsfahrzeug 2 abgewandten Stirnseite ist der Arbeitstisch 40 durch eine nachstehend noch näher erläuterte Tischbeinanordnung 46 abgestützt.

Zweckmäßigerweise greift das nachstehend noch erläuterte Befestigungselement 41 in der Arbeitskonfiguration mit seiner Befestigungsanordnung 48, insbesondere mit den Befestigungsvorsprüngen 53, in die Nut des Abstützabschnitts 27 ein. Zweckmäßigerweise ist der Arbeitstisch 40 in der Arbeitskonfiguration werkzeuglos von dem Beförderungsfahrzeug 2 abnehmbar.

Zweckmäßigerweise ist jeweils an der Vorderseite 10, den beiden Längsseiten 9 und/oder der Rückseite 8 des Beförderungsfahrzeugs 2, insbesondere des integrierten Tischs 18, ein entsprechender Abstützabschnitt 27 vorgesehen, an dem der Arbeitstisch 40 abgestützt werden kann. Der Arbeitstisch 40 ist folglich wahlweise an der Vorderseite 10, einer ersten Längsseite 9, einer zweiten Längsseite 9 und/oder der Rückseite 8 anbringbar.

In der Arbeitskonfiguration ist ferner vorzugsweise die (in der Figur 12 nicht gezeigte) Auszugsanordnung 150 an dem vertikalen Gestellabschnitt 14 angebracht. Zweckmäßigerweise ist ein Behälter 80 von der Behälter-Befestigungsschnittstelle 6 oder einem vertikalen Stapel 90 gelöst und in das Behälter-Aufnahmeelement 152 eingesetzt.

Als nächstes soll auf die Arbeitstisch-Befestigungsschnittstelle 24 näher eingegangen werden.

Die Arbeitstisch-Befestigungsschnittstelle 24 dient dazu, den Arbeitstisch 40 an dem Beförderungsfahrzeug 2 zu befestigen, und zwar derart, dass sich der Arbeitstisch 40 stabil von dem Beförderungsfahrzeug 2 transportieren lässt. Vorzugsweise ist die Arbeitstisch-Befestigungsschnittstelle 24 derart ausgebildet, dass der Arbeitstisch 40 in angebrachtem Zustand in sämtliche Raumrichtungen relativ zum Beförderungsfahrzeug 2 fixiert ist. Es sei angemerkt, dass es sich bei dem Arbeitstisch 40 und/oder der Arbeitstisch-Befestigungsschnittstelle 24 um rein optionale Merkmale handelt.

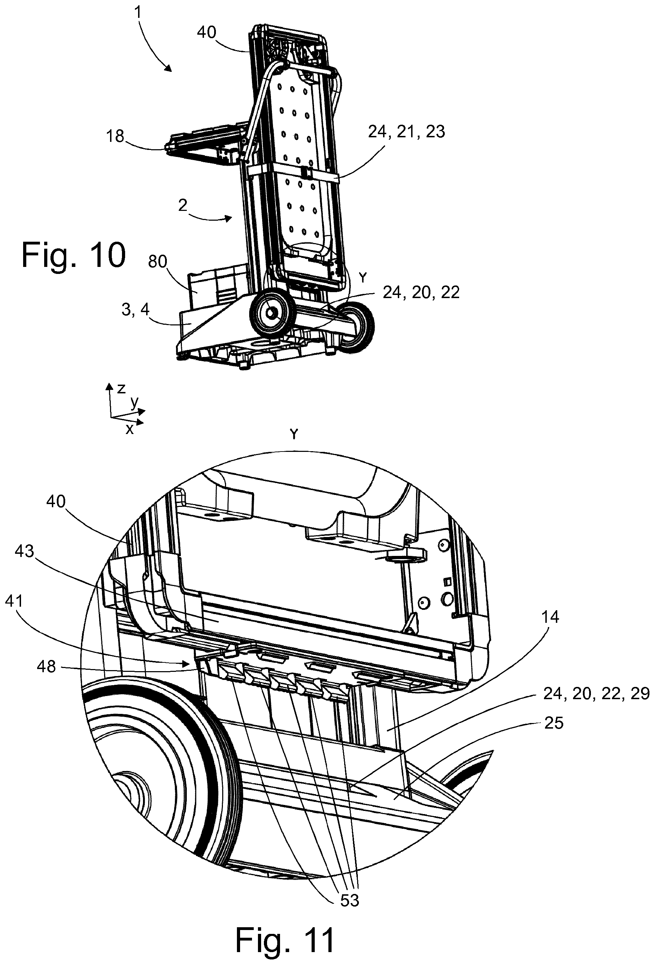

Die Arbeitstisch-Befestigungsschnittstelle 24 umfasst die erste Befestigungseinrichtung 20 und eine zweite Befestigungseinrichtung 21. Die beiden Befestigungseinrichtungen 20, 21 sind beispielsweise in der Figur 10 gezeigt.

Die erste Befestigungseinrichtung 20 ist derart ausgestaltet, dass der Arbeitstisch 40 mit dem Befestigungselement 41 in einer relativ zum vertikalen Gestellabschnitt 14 gekippten Ausrichtung an die erste Befestigungseinrichtung 20 anbringbar ist und durch Verschwenkung hin zu dem vertikalen Gestellabschnitt 14 eine vertikale Fixierung an der ersten Befestigungseinrichtung 20 erzielt wird. Mit der zweiten Befestigungseinrichtung 21 ist der Arbeitstisch 40 dann horizontal fixierbar, insbesondere an dem vertikalen Gestellabschnitt 14.

Zur Abnahme des Arbeitstischs 40 ist es notwendig, die zweite Befestigungseinrichtung 21 zu lösen und den Arbeitstisch 40 weg von dem Gestellabschnitt 14 zu verschwenken, so dass eine relativ zum vertikalen Gestellabschnitt 14 gekippte Ausrichtung einnimmt. Der Arbeitstisch 40 lässt sich dann durch eine lineare Bewegung in y-z-Richtung von dem Beförderungsfahrzeug 2 abnehmen.

Im Folgenden soll auf die am Unterteil vorhandene erste Befestigungseinrichtung 20 eingegangen werden. Die erste Befestigungseinrichtung 20 ist insbesondere in den Figuren 10 und 11 gezeigt.

Die erste Befestigungseinrichtung 20 umfasst einen Schlitz 20 und eine über den Schlitz 20 zugängliche Befestigungsstruktur 29, die mit einem Befestigungselement 41 des Arbeitstischs 40 in Eingriff gebracht werden kann, um den Arbeitstisch 40 an der Arbeitstisch-Befestigungsschnittstelle 24 zu befestigen. Die erste Befestigungseinrichtung 20 ist in rückwärtiger Richtung hinter dem vertikalen Gestellabschnitt 14 angeordnet.

Die Befestigungsanordnung 48 und der Schlitz 22 sind vorzugsweise derart ausgestaltet, dass sich die Befestigungsanordnung 48 nur in der vorstehend erwähnten, gekippten Stellung des Arbeitstischs 40 in den Schlitz 22 einführen lässt.

Die Figur 11 zeigt den in der Figur 10 mit "Y" gekennzeichneten Bereich im Detail. Zum Zwecke der besseren Sichtbarkeit ist der Arbeitstisch 40 in den Figuren 10 und 11 in einer Position gezeigt, in der das Befestigungselement 41 nicht in den Schlitz 22 eingeführt ist. Bei einer korrekten Anbringung des Arbeitstischs 40 am Beförderungsfahrzeug 2 ist das Befestigungselement 41 in den Schlitz 22 eingeführt.

Wie in der Figur 11 zu sehen, erstreckt sich der Schlitz 22 in x-Richtung und ist in y-Richtung unmittelbar hinter dem vertikalen Gestellabschnitt 14 angeordnet. Der Schlitz 22 befindet sich auf einem angewinkelten Oberseitenabschnitt 25. Der Normalvektor des angewinkelten Oberseitenabschnitts 25 zeigt insbesondere in eine y-z-Richtung. In der Figur 10 ist ferner das Befestigungselement 41 zu sehen, das über eine insbesondere hakenförmige Befestigungsanordnung 48 mit exemplarisch mehreren L-förmigen Befestigungsvorsprüngen 53 verfügt. Die Befestigungsstruktur 29 ist derart ausgebildet, dass sie mit der Befestigungsanordnung 48, insbesondere den Befestigungsvorsprüngen 53 in Eingriff gebracht werden kann, so dass der Arbeitstisch 40 am Unterteil 4 zumindest in einer Linearrichtung, insbesondere der Vertikalrichtung, fixiert wird. Die Befestigungsstruktur 29 umfasst beispielsweise eine (in den Figuren nicht gezeigte) Befestigungsfläche, die von der Befestigungsanordnung 48 hintergriffen wird.

Im Folgenden soll auf eine exemplarische Ausgestaltung der zweiten Befestigungseinrichtung 21 im Detail eingegangen werden:
Die zweite Befestigungseinrichtung 21 ist am vertikalen Gestellabschnitt 14 angeordnet, exemplarisch im oberen Bereich des vertikalen Gestellabschnitts 14. Die zweite Befestigungseinrichtung 21 umfasst einen Gurt 23, mit dem der Arbeitstisch in der Transportstellung an dem vertikalen Gestellabschnitt 14 in horizontaler Richtung fixierbar ist. Der Gurt 23 ist exemplarisch an zwei Verankerungspunkten befestigt. Die beiden Verankerungspunkte liegen exemplarisch auf gleicher Höhe. Exemplarisch ist der Gurt 23 in der Transportstellung quer um den Arbeitstisch 40 gelegt. Der Gurt 23 hat in diesem Zustand in einer x-y-Ansicht einen U-förmigen Verlauf. Der Gurt 23 verfügt über ein Verschlusselement 28, mit dem er sich zur Freigabe oder Aufnahme des Arbeitstischs 40 öffnen und zur Fixierung des Arbeitstischs 40 schließen lässt. Exemplarisch ist das Verschlusselement 28 in x-Richtung in der Mitte des Gurts 23 angeordnet.

Im Folgenden soll der Griff 12 näher erläutert werden:
Der Griff 12 ist zweckmäßigerweise bügelförmig, insbesondere U-förmig ausgebildet. Der Griff 12 verfügt über zwei äußere Abschnitte 36, mit denen der Griff an dem vertikalen Gestellabschnitt 14 verschwenkbar angebracht ist. Die beiden äußeren Abschnitte 36 sind über einen mittleren, in x-Richtung verlaufenden Abschnitt 37 verbunden.

Das Beförderungsfahrzeug 2 verfügt über einen Positioniermechanismus 26, mit dem der Griff 12 in wenigstens zwei verschiedene Schwenkstellungen positioniert und fixiert werden kann. Exemplarisch ist der Griff 12 durch den Positioniermechanismus in drei verschiedenen Schwenkstellungen fixierbar.

Im Folgenden soll näher auf den Arbeitstisch 40 eingegangen werden, insbesondere unter Bezugnahme auf die Figur 12.

Der Arbeitstisch 40 hat eine längliche, insbesondere rechteckige Grundgestalt. Zweckmäßigerweise ist der Arbeitstisch 40 wenigstens 1,5 mal, insbesondere doppelt so lang wie breit. Der Arbeitstisch 40 verfügt über ein rahmenförmiges Arbeitstisch-Gestell, das längsseitige Arbeitstisch-Gestellelemente 42 und querseitige Arbeitstisch-Gestellelemente 43 umfasst. Die längsseiteigen Arbeitstisch-Gestellelemente 42 und die querseitigen Arbeitstisch-Gestellelemente 43 sind zweckmäßigerweise stangenförmig und insbesondere als Profile, vorzugsweise als Metallprofile, ausgebildet. Auf das rahmenförmige Arbeitstisch-Gestell ist eine Tischplatte 44 aufgesetzt.

Der Arbeitstisch 40 verfügt über die ausklappbare Tischbeinanordnung 46, die exemplarisch U-förmig ist. Die (im ausgeklappten Zustand) vertikalen Abschnitte der Tischbeinanordnung 46 sollen auch als Tischbeine bezeichnet werden. Die Tischbeinanordnung 46 ist zweckmäßigerweise an der Unterseite des Arbeitstischs 40 angeordnet, vorzugsweise im Bereich einer Stirnseite des Arbeitstischs 40.

## Patentansprüche

1. Beförderungsfahrzeug (2), umfassend:
- einen Fahrzeugkörper mit einem unteren Abschnitt (3) und einem sich von dem unteren Abschnitt (3) nach oben erstreckenden vertikalen Gestellabschnitt (14), wobei der untere Abschnitt (3) über eine Stellfläche (5) und über eine Behälter-Befestigungsschnittstelle (6) verfügt, mit der ein kastenförmiger Behälter (80) in einem auf der Stellfläche (5) abgestellten Zustand an dem unteren Abschnitt (3) befestigbar ist,
- einen am Fahrzeugkörper angeordneten Griff (12), mit dem das Beförderungsfahrzeug (2) in eine Kippstellung versetzbar ist, und
- zwei am unteren Abschnitt (3) angeordnete Räder (11), mit denen das Beförderungsfahrzeug (2) in der Kippstellung gegenüber einem Boden abgestützt und relativ zum Boden bewegt werden kann,
wobei
das Beförderungsfahrzeug (2) oberhalb der Behälter-Befestigungsschnittstelle (6) eine am vertikalen Gestellabschnitt (14) angeordnete Auszuganordnung (150) mit einem horizontal ausziehbaren Behälter-Aufnahmeelement (152) zur Aufnahme des kastenförmigen Behälters aufweist, wobei die Auszugsanordnung (150) über einen Befestigungsmechanismus (170) verfügt, mit dem die Auszugsanordnung (150) in einem am vertikalen Gestellabschnitt (14) angebrachten Zustand vertikal stufenlos gegenüber dem vertikalen Gestellabschnitt (14) positionierbar ist,
**dadurch gekennzeichnet, dass**
der Befestigungsmechanismus (170) über eine erste Bedieneinrichtung (171) verfügt, mit der die Auszugsanordnung (150) werkzeuglos vom vertikalen Gestellabschnitt (14) abgenommen und an diesem angebracht werden kann und ferner über eine zweite Bedieneinrichtung (172) verfügt, mit der die Auszugsanordnung (150) werkzeuglos am vertikalen Gestellabschnitt (14) vertikal fixiert werden kann.

2. Beförderungsfahrzeug (2) nach Anspruch 1, **dadurch gekennzeichnet, dass** der Befestigungsmechanismus (170) ausgebildet ist, die Auszugsanordnung (150) durch Festklemmen am vertikalen Gestellabschnitt (14) vertikal zu fixieren.

3. Beförderungsfahrzeug (2) nach Anspruch 1 oder 2, **dadurch gekennzeichnet, dass** die erste Bedieneinrichtung (171) ein erstes Bedienelement (173) umfasst und/oder die zweite Bedieneinrichtung (172) ein zweites Bedienelement (174) umfasst.

4. Beförderungsfahrzeug (2) nach Anspruch 3, **dadurch gekennzeichnet, dass** das erste Bedienelement (173) und/oder das zweite Bedienelement (174) laschenförmig sind.

5. Beförderungsfahrzeug (2) nach Anspruch 3 oder 4, **dadurch gekennzeichnet, dass** das erste Bedienelement (173) und/oder das zweite Bedienelement (174) verschwenkbar gelagert sind.

6. Beförderungsfahrzeug (2) nach Anspruch 5, **dadurch gekennzeichnet, dass** das zweite Bedienelement (174) verschwenkbar an dem ersten Bedienelement (173) gelagert ist.

7. Beförderungsfahrzeug (2) nach einem der Ansprüche 3 bis 6, **dadurch gekennzeichnet, dass** das erste Bedienelement (173) einen Befestigungsabschnitt (181) umfasst, der durch Verschwenkung des ersten Bedienelements (173) in Eingriff mit einer am vertikalen Gestellabschnitt (14) vorhandenen Anlagefläche (191) gebracht werden kann, um die Auszugsanordnung (150) an dem vertikalen Gestellabschnitt (14) anzubringen.

8. Beförderungsfahrzeug (2) nach Anspruch 7, **dadurch gekennzeichnet, dass** das erste Bedienelement (173) über eine Exzenter-Struktur (187) mit dem zweiten Bedienelement (174) gekoppelt ist, so dass bei Verschwenkung des zweiten Bedienelements (174) der an der Anlagefläche (191) anliegende Befestigungsabschnitt (181) in Richtung hin zur Anlagefläche (191) angezogen wird, so dass die Auszugsanordnung (150) am vertikalen Gestellabschnitt (14) festgeklemmt und dadurch vertikal fixiert wird.

9. Beförderungsfahrzeug (2) nach einem der voranstehenden Ansprüche, **dadurch gekennzeichnet, dass** der Befestigungsmechanismus (170) über ein drittes Bedienelement (178) verfügt, über das die Stärke der vertikalen Fixierung der Auszugsanordnung (150) am vertikalen Gestellabschnitt (14) eingestellt werden kann.

10. Beförderungsfahrzeug (2) nach Anspruch 9, **dadurch gekennzeichnet, dass** das dritte Bedienelement (178) eine Rändelmutter umfasst.

11. Beförderungsfahrzeug (2) nach einem der voranstehenden Ansprüche, **dadurch gekennzeichnet, dass** die Auszugsanordnung (150) über zwei Tragearme (154) verfügt, an denen das Behälter-Aufnahmeelement (152) verschiebbar gelagert ist, wobei an jedem Tragearm (154) ein erstes Bedienelement (173) zur werkzeuglosen Abnahme der Auszugsanordnung (150) und ein zweites Bedienelement (174) zur werkzeuglosen vertikalen Fixierung der Auszugsanordnung (150) vorhanden ist.

12. Beförderungsfahrzeug (2) nach Anspruch 11, **dadurch gekennzeichnet, dass** die beiden Tragearme (154) über zwei sich kreuzende längliche Stabilisierungselemente miteinander verbunden sind.

13. Beförderungsfahrzeug (2) nach einem der voranstehenden Ansprüche, **dadurch gekennzeichnet, dass** das Behälter-Aufnahmeelement (152) als Schublade ausgebildet ist.

14. Beförderungsvorrichtung (1) umfassend ein Beförderungsfahrzeug (2) nach einem der voranstehenden Ansprüche sowie den kastenförmigen Behälter (80).

## Claims

1. Transport vehicle (2), comprising:
- a vehicle body having a lower section (3) and a vertical frame section (14) extending upwards from the lower section (3), the lower section (3) having a storage surface (5) and a container attachment interface (6) for attaching a box-shaped container (80) to the lower section (3) in a state in which the box-shaped container (80) is placed on the storage surface (5),
- a handle (12) arranged on the vehicle body for moving the transport vehicle (2) into a tilted position, and
- two wheels (11) arranged on the lower section (3) for supporting the transport vehicle (2) in the tilted position relative to a floor and moving the transport vehicle (2) relative to the floor,
wherein
the transport vehicle (2) has, above the container attachment interface (6), a pull-out assembly (150) disposed on the vertical frame section (14) and having a horizontal pull-out container accommodation element (152) for accommodating the box-shaped container, the pull-out assembly (150) having an attachment mechanism (170) by means of which the pull-out assembly (150) is, in a state attached to the vertical frame section (14), vertically steplessly positionable relative to the vertical frame section (14),
**characterized in that**
the attachment mechanism (170) has a first operating device (171) for removing the pull-out assembly (150) from and attaching the pull-out assembly (150) to the vertical frame section (14) without the use of tools and further has a second operating device (172) for fixing the pull-out assembly (150) vertically to the vertical frame section (14) without the use of tools.

2. Transport vehicle (2) according to claim 1, **characterized in that** the attachment mechanism (170) is adapted to vertically fix the pull-out assembly (150) by clamping it to the vertical frame section (14).

3. Transport vehicle (2) according to claim 1 or 2, **characterized in that** the first operating device (171) comprises a first operating element (173) and/or the second operating device (172) comprises a second operating element (174) .

4. Transport vehicle (2) according to claim 3, **characterized in that** the first operating element (173) and/or the second operating element (174) are flap-shaped.

5. Transport vehicle (2) according to claim 3 or 4, **characterized in that** the first operating element (173) and/or the second operating element (174) are pivotally mounted.

6. Transport vehicle (2) according to claim 5, **characterized in that** the second operating element (174) is pivotally mounted on the first operating element (173).

7. Transport vehicle (2) according to any one of claims 3 to 6, **characterized in that** the first operating element (173) comprises an attachment section (181) engageable with a contact surface (191) provided on the vertical frame section (14) by pivoting the first operating element (173), in order to mount the pull-out assembly (150) on the vertical frame section (14).

8. Transport vehicle (2) according to claim 7, **characterized in that** the first operating element (173) is coupled to the second operating element (174) via an excentric structure (187), so that, when the second operating element (174) is pivoted, the attachment section (181) resting on the contact surface (191) is pulled in the direction towards the contact surface (191), so that the pull-out assembly (150) is clamped to the vertical frame section (14) and is thereby fixed vertically.

9. Transport vehicle (2) according to one of the preceding claims, **characterized in that** the attachment mechanism (170) has a third operating element (178) for adjusting the strength of the vertical fixation of the pull-out assembly (150) to the vertical frame section (14).

10. Transport vehicle (2) according to claim 9, **characterized in that** the third operating element (178) comprises a knurled nut.

11. Transport vehicle (2) according to one of the above claims, **characterised in that** the pull-out assembly (150) has two support arms (154) on which the container accommodation element (152) is displaceably mounted, wherein a first operating element (173) for removing the pull-out assembly (150) without the use of tools and a second operating element (174) for vertically fixing the pull-out assembly (150) without the use of tools are provided on each support arm (154) .

12. Transport vehicle (2) according to claim 11,
**characterized in that** the two support arms (154) are connected to each other by two crossing elongate stabilizing elements.

13. Transport vehicle (2) according to one of the above claims, **characterized in that** the container accommodation element (152) is designed as a drawer.

14. Transport device (1) comprising a transport vehicle (2) according to one of the above claims and the box-shaped container (80).

## Revendications

1. Véhicule de transport (2) comprenant :
- un corps de véhicule avec une section inférieure (3) et une section de bâti verticale (14) s'étendant vers le haut depuis la section inférieure (3), dans lequel la section inférieure (3) dispose d'une surface de support (5) et d'une interface de fixation de contenant (6), avec laquelle un contenant (80) en forme de caisson peut être fixé sur la section inférieure (3) dans un état déposé sur la surface de support (5),
- une poignée (12) disposée sur le corps de véhicule, avec laquelle le véhicule de transport (2) peut être amené dans une position de basculement, et
- deux roues (11) disposées sur la section inférieure (3), avec lesquelles le véhicule de transport (2) peut être soutenu par rapport à un sol dans la position de basculement et peut être déplacé par rapport au sol,
dans lequel
le véhicule de transport (2) présente, au-dessus de l'interface de fixation de contenant (6), un ensemble d'extraction (150) disposé sur la section de bâti verticale (14), avec un élément de réception de contenant (152) pouvant être extrait horizontalement, destiné à recevoir le contenant en forme de caisson, dans lequel l'ensemble d'extraction (150) dispose d'un mécanisme de fixation (170), avec lequel l'ensemble d'extraction (150) peut être positionné verticalement progressivement par rapport à la section de bâti verticale (14) dans un état installé sur la section de bâti verticale (14),
**caractérisé en ce que**
le mécanisme de fixation (170) dispose d'un premier système d'utilisation (171), avec lequel l'ensemble d'extraction (150) peut être retiré sans outil de la section de bâti verticale (14) et peut être installé sur celle-ci et, dispose en outre d'un deuxième système d'utilisation (172), avec lequel l'ensemble d'extraction (150) peut être bloqué verticalement sans outil sur la section de bâti verticale (14).

2. Véhicule de transport (2) selon la revendication 1, **caractérisé en ce que** le mécanisme de fixation (170) est réalisé pour bloquer verticalement l'ensemble d'extraction (150) par serrage sur la section de bâti verticale (14).

3. Véhicule de transport (2) selon la revendication 1 ou 2, **caractérisé en ce que** le premier système d'utilisation (171) comprend un premier élément d'utilisation (173) et/ou le deuxième système d'utilisation (172) comprend un deuxième élément d'utilisation (174).

4. Véhicule de transport (2) selon la revendication 3, **caractérisé en ce que** le premier élément d'utilisation (173) et/ou le deuxième élément d'utilisation (174) sont en forme de bride.

5. Véhicule de transport (2) selon la revendication 3 ou 4, **caractérisé en ce que** le premier élément d'utilisation (173) et/ou le deuxième élément d'utilisation (174) sont montés de manière à pouvoir pivoter.

6. Véhicule de transport (2) selon la revendication 5, **caractérisé en ce que** le deuxième élément d'utilisation (174) est monté de manière à pouvoir pivoter sur le premier élément d'utilisation (173).

7. Véhicule de transport (2) selon l'une quelconque des revendications 3 à 6, **caractérisé en ce que** le premier élément d'utilisation (173) comprend une section de fixation (181), qui peut être amenée en prise avec une surface d'appui (191) présente sur la section de bâti verticale (14) par pivotement du premier élément d'utilisation (173) pour installer l'ensemble d'extraction (150) sur la section de bâti verticale (14).

8. Véhicule de transport (2) selon la revendication 7, **caractérisé en ce que** le premier élément d'utilisation (173) est couplé au deuxième élément d'utilisation (174) par l'intermédiaire d'une structure excentrique (187) de telle sorte que lors du pivotement du deuxième élément d'utilisation (174), la section de fixation (181) reposant sur la surface d'appui (191) est attirée en direction de la surface d'appui (191) si bien que l'ensemble d'extraction (150) est serré sur la section de bâti verticale (14) et est ainsi bloqué verticalement.

9. Véhicule de transport (2) selon l'une quelconque des revendications précédentes, **caractérisé en ce que** le mécanisme de fixation (170) dispose d'un troisième élément d'utilisation (178), par l'intermédiaire duquel la force du blocage vertical de l'ensemble d'extraction (150) peut être réglée sur la section de bâti verticale (14).

10. Véhicule de transport (2) selon la revendication 9, **caractérisé en ce que** le troisième élément d'utilisation (178) comprend un écrou moleté.

11. Véhicule de transport (2) selon l'une quelconque des revendications précédentes, **caractérisé en ce que** l'ensemble d'extraction (150) dispose de deux bras porteurs (154), sur lesquels l'élément de réception de contenant (152) est monté de manière à pouvoir coulisser, dans lequel un premier élément d'utilisation (173) est présent sur chaque bras porteur (154) pour retirer sans outil l'ensemble d'extraction (150) et un deuxième élément d'utilisation (174) est présent pour bloquer verticalement sans outil l'ensemble d'extraction (150).

12. Véhicule de transport (2) selon la revendication 11, **caractérisé en ce que** les deux bras porteurs (154) sont reliés l'un à l'autre par l'intermédiaire de deux éléments de stabilisation allongés se croisant.

13. Véhicule de transport (2) selon l'une quelconque des revendications précédentes, **caractérisé en ce que** l'élément de réception de contenant (152) est réalisé comme un tiroir.

14. Dispositif de transport (1) comprenant un véhicule de transport (2) selon l'une quelconque des revendications précédentes, ainsi que le contenant (80) en forme de caisson.
